# EUROPEAN PATENT SPECIFICATION

(11) **EP 4 120 650 B1**
(45) Date of publication and mention of the grant of the patent: **29.10.2025**
(21) Application number: 21767944.8
(22) Date of filing: 18.01.2021
(51) Int. Cl.: H04L 12/40

(54) **COMMUNICATION CONTROL DEVICE AND METHOD FOR CONTROLLING COMMUNICATION CONTROL DEVICE**
KOMMUNIKATIONSSTEUERGERÄT UND VERFAHREN ZUR STEUERUNG EINES KOMMUNIKATIONSSTEUERGERÄTS
DISPOSITIF DE COMMANDE DE COMMUNICATION ET PROCÉDÉ DE COMMANDE DE DISPOSITIF DE COMMANDE DE COMMUNICATION

(30) Priority: 09.03.2020 JP 2020039983
(43) Date of publication of application: 18.01.2023
(73) Proprietor: OMRON Corporation, Kyoto 600-8530 (JP)
(72) Inventor: TAMAI, Toshinori, Kyoto-shi, Kyoto 600-8530 (JP)
(74) Representative: Becker, Eberhard
(86) International application number: PCT/JP2021/001403
(87) International publication number: WO 2021/181874

(56) References cited:
- JP-A- 2004 048 394
- US-A1- 2011 258 283
- US-A1- 2013 315 237
- US-A1- 2015 281 120
- US-A1- 2018 069 790

## Description

### [Technical Field]

The present invention relates to a communication control device and the like that stores reception data received from a network in one of a plurality of reception queues to which different priorities have been given in advance to transfer the reception data to a main memory.

### [Background Art]

In the related art, a technique of determining in which of a plurality of transfer queues a plurality of pieces of data are to be stored according to processing priorities of the plurality of pieces of data in a communication control device that transfers the plurality of received pieces of data to a main memory and that includes the plurality of transfer queues is known. For example, Patent Literature 1 discloses a communication control device that selects a transfer queue on the basis of a priority tag given to a data frame.
US 20180/069790 Al discloses a packet transfer device including: a first storage that stores a first priority packet; a second storage that stores a second priority packet having a lower priority than the first priority packet; a first reader that reads the first priority packet stored into the first storage before storing the first priority packet into the first storage is completed; and a second reader that reads the second priority packet stored into the second storage after storing the second priority packet stored into the second storage is completed. US 20180/069790 A1 discloses that the priority of the packet is identified based on the priority in the VLAN tag included in the packet

### [Citation List]

### [Patent Literature]

[Patent Literature 1] Japanese Patent Laid-Open No. 2003-244222

### [Summary of Invention]

### [Technical Problem]

However, in the related art, there is a problem in that additional information (a "priority tag" in Patent Literature 1) added to data has to be used to select a transfer queue in which the data is to be stored out of a plurality of transfer queues.

The present invention is provided by the appended claims. The following disclosure serves a better understanding of the present invention. An objective of an aspect of the present invention is to enable selecting a transfer queue in which data is to be stored out of a plurality of transfer queues according to a processing priority of the data without adding additional information indicating the processing priority to the data.

### [Solution to Problem]

In order to achieve the aforementioned objective, according to an aspect of the present invention, there is provided a communication control device that stores reception data received from a network in any one of a plurality of reception queues to which different priorities have been given in advance to transfer the reception data to a main memory, the communication control device including: a reference table in which at least one of a source address, a destination address, and an Ethernet frame type of the reception data to be stored is defined for at least one of the plurality of reception queues; and a selection unit configured to select a reception queue in which the reception data is to be stored with reference to the reference table using at least one of the source address, the destination address, and the Ethernet frame type of the reception data.

In order to achieve the aforementioned objective, according to another aspect of the present invention, there is provided a method for controlling a communication control device that stores reception data received from a network in any one of a plurality of reception queues to which different priorities have been given in advance to transfer the reception data to a main memory, the method including: a selection step of selecting a reception queue in which the reception data is to be stored out of the plurality of reception queues using at least one of a source address, a destination address, and an Ethernet frame type of the reception data with reference to a reference table in which at least one of the source address, the destination address, and the Ethernet frame type of the reception data to be stored is defined for at least one of the plurality of reception queues; and a storage step of storing the reception data in the reception queue selected in the selection step.

### [Effects of Invention]

According to the aspects of the present invention, it is possible to enable selecting a transfer queue in which data is to be stored out of a plurality of transfer queues according to a processing priority of the data without adding additional information indicating the processing priority to the data.

### [Brief Description of Drawings]

FIG. 1 is a diagram illustrating a principal configuration of a PLC including a communication controller according to a first embodiment of the present invention.
FIG. 2 is a diagram illustrating an outline of a control system including the PLC illustrated in FIG. 1.
FIG. 3 is a diagram illustrating a situation which is to be resolved by the communication controller according to the first embodiment of the present invention.
FIG. 4 is a diagram illustrating a situation in which the transfer order of reception data to a main memory is changed from the reception order of the reception data by the communication controller according to the first embodiment of the present invention.
FIG. 5 is a diagram illustrating a queue selection table used by the communication controller according to the first embodiment of the present invention.
FIG. 6 is a diagram illustrating a start time log or the like generated by the communication controller according to the first embodiment of the present invention.
FIG. 7 is a flowchart illustrating the whole outline of a routine performed by the PLC illustrated in FIG. 1.
FIG. 8 is a flowchart illustrating a detailed example of a queue selecting process illustrated in FIG. 7.
FIG. 9 is a flowchart illustrating a detailed example of a transfer process illustrated in FIG. 7.
FIG. 10 is a flowchart illustrating a detailed example of a mediation process and a storage process illustrated in FIG. 9.

### [Description of Embodiments]

### [First Embodiment]

Hereinafter, an embodiment of an aspect of the present invention (hereinafter also referred to as "this embodiment") will be described with reference to the accompanying drawings. The same or corresponding elements will be referred to by the same reference signs, and description thereof will not be repeated. In this embodiment, a communication controller 10 included in a programmable logic controller (PLC) 1 that controls a control object such as a machine and a facility is described as a typical example of a communication control device.

In the following description, "n," "N," "p," and "q" are integers equal to or greater than "1," and "p" and "q" are different integers.

In the following description, a "reception queue" may be referred to as "RX" for the purpose of simplification of description. For example, a first reception queue 13(0) may be referred to as "RX0," and a second reception queue 13(1) may be referred to as "RX1." The first reception queue 13(0) (that is, RX0) and the second reception queue 13(1) (that is, RX1) may be simply referred to as a "reception queue 13" or "RX" when they do not need to be particularly distinguished.

### 1. Application examples

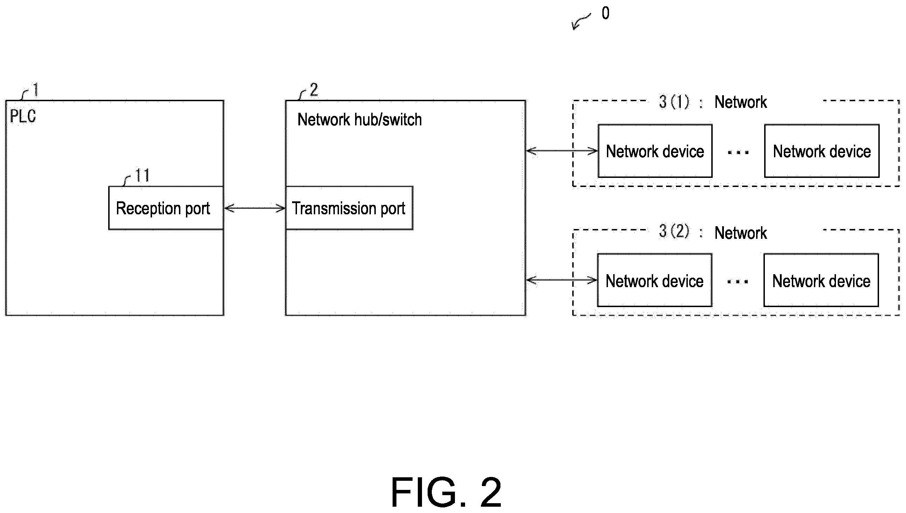

For the purpose of easy understanding of the communication controller 10 (communication control device) according to an aspect of the present invention, an example of a situation to which the present invention is applied, specifically, the outline of a control system 0 including the PLC 1 including the communication controller 10, will be first described below with reference to FIG. 2.

### (Outline of control system)

FIG. 2 is a diagram illustrating the outline of the control system 0. The control system 0 includes the PLC 1, a network hub 2, and networks 3(1) and 3(2) connected to the PLC 1 via the network hub 2. In the following description, the network 3(1) and the network 3(2) may be simply referred to as a "network 3" when they do not need to be particularly distinguished. The network 3 may include one or more network devices.

In the control system 0 illustrated in FIG. 2, a plurality of networks 3 are connected to the PLC 1 via the network hub 2. Giga bands may be used for communication in the control system 0.

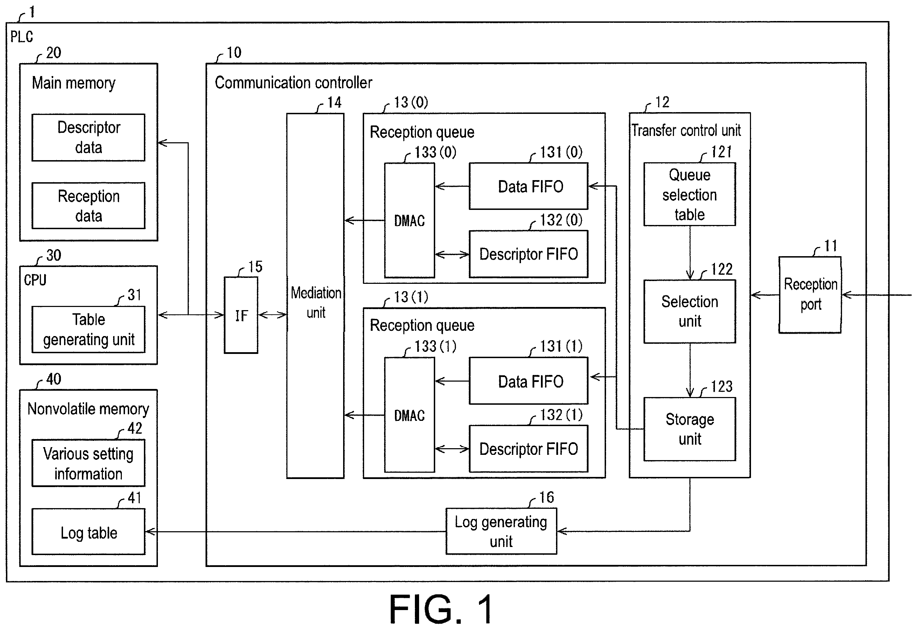

The PLC 1 is a control device that controls the control system 0 as a whole, and the network hub 2 is a network hub or a network switch that manages communication between the PLC 1 and the plurality of networks 3. In the control system 0 illustrated in FIG. 2, a plurality of networks 3, for example, the networks 3(1) and 3(2), are present for one network port of the PLC 1 (that is, a reception port 11 in FIG. 1).

Here, both the networks 3(1) and 3(2) may be control networks, that is, all the networks 3 communicating with the PLC 1 may be control networks. One of the networks 3(1) and 3(2) may be a control network and the other may be a data network, that is, a control network and a data network may be mixed as the networks 3 that communicate with the PLC 1.

For example, when a network 3 is a control network, the PLC 1 is a control device that takes charge of control of an input device and an output device in a production facility, and network devices are the input device and the output device in the production facility. The PLC 1 and the network devices transmit and receive IN data and OUT data (hereinafter referred to as "IO data") by cyclically communicating with each other via the network 3, and the PLC 1 controls the production facility as a whole. That is, when a network 3 is a control network, the control system 0 can be understood as a master-slave control system with the PLC 1 as a master device (a master device that manages transfer of data) and with the network devices as slave devices.

When a network 3 is a control network, the network 3 may be based on an industrial Ethernet (registered trademark) standard such as an EtherCAT (Ethernet for Control Automation Technology: registered trademark) standard. When a network 3 is a control network, the network 3 may be based on an Ethernet/IP (registered trademark) standard.

An example in which communication between the PLC 1 and the network devices (hereinafter also referred to as "network communication) in FIG. 2 is based on the Ethernet standard will be described below. It is assumed that a CPU 30 and the communication controller 10 be communicatively connected via peripheral component interconnect express (PCIe).

The control system 0 in which a plurality of networks 3 are connected to the PLC 1 via the network hub 2 is illustrated in FIG. 2, but a plurality of networks 3 do not have to be connected to the PLC 1 via the network hub 2 in the control system 0. In the control system 0, one network 3 (particularly, one control network) may be connected to the PLC 1 without passing through the network hub 2. For example, in the control system 0 which is a master-slave control system, the PLC 1 which is a master device and one or more network devices of which each is a slave device may be communicatively connected in a unicursal manner.

### (Specific example of situation to be resolved by communication controller according to embodiment)

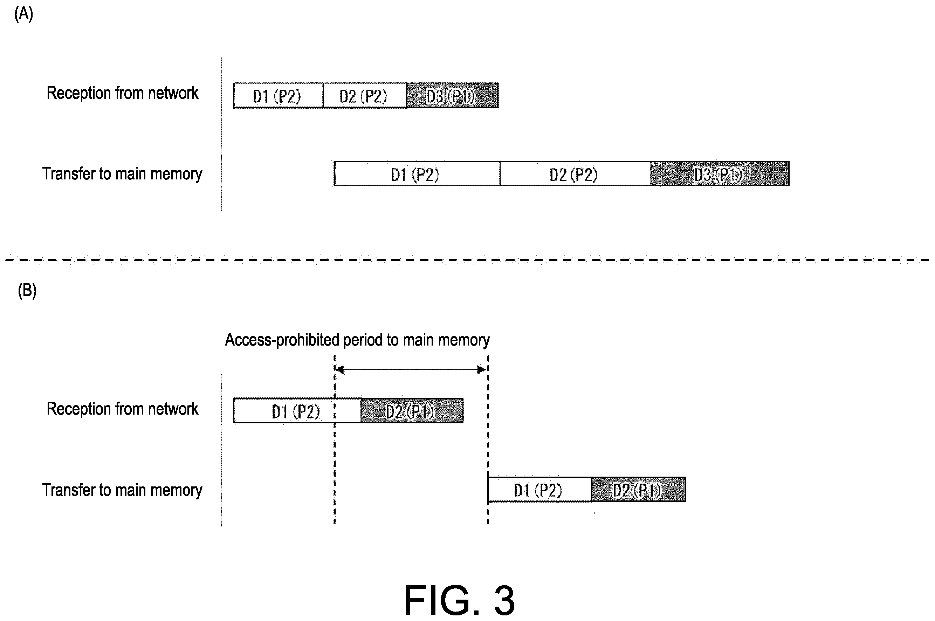

FIG. 3 is a diagram illustrating a situation which is to be resolved by the communication controller 10 (particularly, a transfer control unit 12). Specifically, FIG. 3 is a diagram illustrating a situation which may occur when a plurality of pieces of reception data are transferred to (stored in) a main memory 20 in the reception order from the network 3.

In the following description, "in what order the CPU 30 is to process" data received from the network 3 (reception data) by the PLC 1 (particularly, the communication controller 10) is indicated by words "processing priority P." Here, the processing priority P does not have to be given to the data (reception data) received from the network 3 by the PLC 1 (particularly, the communication controller 10). Although details will be described later, this is because the PLC 1 (particularly, the communication controller 10) can ascertain the processing priority P of the reception data using at least one of a source address, a destination address, and an Ethernet frame type (for example, information for distinguishing IPv4, ECAT, and the like) of the reception data.

That is, the processing priority P of reception data is not given to the reception data, but the word "processing priority P" is merely used to simply explain "in what order the CPU 30 is to process" the reception data.

The "processing priority P" becomes higher as the value thereof becomes smaller, and a "P1, i.e., processing priority P=1" is higher than a "P2, i.e., processing priority P=2." Accordingly, it is preferable that data with the "processing priority P=1" be processed earlier than data with the "processing priority P=2" by the CPU 30. The data with the "processing priority P=1" has a higher processing priority P than the data with the "processing priority P=2" and thus is also referred to as "high-priority data." Similarly, the data with the "processing priority P=2" has a lower processing priority P than the data with the "processing priority P=1" (that is, high-priority data) and thus is also referred to as "low-priority data."

The "order in which the PLC 1 (particularly, the communication controller 10) has received data (reception data) from the network 3" is also referred to as "reception order." The "order in which the communication controller 10 transfers (stores) data received from the network 3 to the main memory 20" is also referred to as "transfer order." The data stored in the main memory 20 is processed by the CPU 30 in the order matching the transfer order in principle.

(A) of FIG. 3 is a diagram illustrating a situation in which a plurality of pieces of reception data are transferred to (stored in) the main memory 20 in the reception order from the network 3 when a rate of network communication is higher than a rate of communication between the CPU 30 and the communication controller 10.

With an increase of the rate of communication based on the Ethernet standard, the rate of network communication may be higher than the rate of communication between the CPU 30 and the communication controller 10. For example, the communication rate of communication based on the Ethernet standard may be 10 Gbits/s, and the communication rate of PCIe Gen2 may be 5 Gbits/s.

In the case in which the communication rate of network communication is higher than the communication rate of communication between the CPU 30 and the communication controller 10, the situation illustrated in (A) of FIG. 3 may occur when the transfer order is matched with the reception order.

That is, the PLC 1 (particularly, the communication controller 10) receives data D3 from the network 3 subsequently to data D2 and the transfer order is matched with the reception order, the data D3 is transferred to the main memory 20 subsequently to the data D2.

Here, in (A) of FIG. 3, the data D3 (with a processing priority P=1) is high-priority data, and the data D2 (with a processing priority P=2) is low-priority data.

However, when the transfer order is matched with the reception order, the data D3 which is high-priority data is transferred to the main memory 20 subsequently to the data D2 which is low-priority data, that is, transfer of the data D3 which is high-priority data to the main memory 20 is delayed. As a result, it is difficult to cause the CPU 30 to process the data D3 which is high-priority data prior to the data D2 which is low-priority data. Particularly, when the communication rate of network communication is higher than the communication rate of communication between the CPU 30 and the communication controller 10, the delay of processing of the data D3 which is high-priority data greatly affects the control of the control system 0 as a whole.

(B) of FIG. 3 is a diagram illustrating a situation in which a plurality of pieces of reception data are transferred to (stored in) the main memory 20 in the reception order from the network 3 when a period in which access to the main memory 20 is prohibited (an access-prohibited period) is provided.

Here, "memory contention" occurs when a plurality of access requests for the main memory 20 are generated at the same timing. A period in which access to the main memory 20 is prohibited, that is, an "access-prohibited period," may be provided to curb occurrence of memory contention without causing an arithmetic unit (that is, the CPU 30) to perform a mediation process for preventing memory contention. When the CPU 30 is to perform an important process using data stored in the main memory 20 while a device (for example, the communication controller 10) other than the CPU 30 is accessing the main memory 20, a processing rate of the CPU 30 decreases. In order to prevent the decrease, an "access-prohibited period" which is a period in which a device other than the CPU 30 is prohibited from accessing the main memory 20 may be provided. An access-prohibited period may be provided in the PLC 1 (particularly, the communication controller 10).

When an access-prohibited period is set, high-priority data is received in the access-prohibited period, and the transfer order to the main memory 20 is matched with the reception order of the data, the high-priority data may be transferred subsequently to low-priority data and transfer of the high-priority data may be greatly delayed.

That is, in (B) of FIG. 3, data D2 (with a processing priority P=1) is high-priority data, and data D1 (with a processing priority P=2) is low-priority data. The PLC 1 (particularly, the communication controller 10) receives the data D2 (with a processing priority P=1) from the network 3 in the access-prohibited period subsequently to the data D1 (with a processing priority P=2).

When the transfer order is matched with the reception order, the data D2 (with a processing priority P=1) is transferred to the main memory 20 after the data D1 (with a processing priority P=2) has been transferred to the main memory 20. When an access-prohibited period is provided, the communication controller 10 cannot access the main memory 20 in the access-prohibited period, and thus the data D1 (with a processing priority P=2) is transferred to the main memory 20 after the access-prohibited period has elapsed. Accordingly, in comparison with a case in which an access-prohibited period is not provided, the timing at which the data D2 (with a processing priority P=1) is transferred to the main memory 20 is further delayed when the access-prohibited period is provided.

As illustrated in (B) of FIG. 3, when the transfer order is matched with the reception order, it is difficult to cause the CPU 30 to process the data D2, which is high-priority data received subsequently to the data D1 which is low-priority data, prior to the data D1. Particularly, when an access-prohibited period is provided and the transfer order is matched with the reception order, processing of the data D2 which is high-priority data by the CPU 30 is delayed in comparison with a case in which an access-prohibited period is not provided.

### (Specific example of transfer order realized by communication controller according to embodiment)

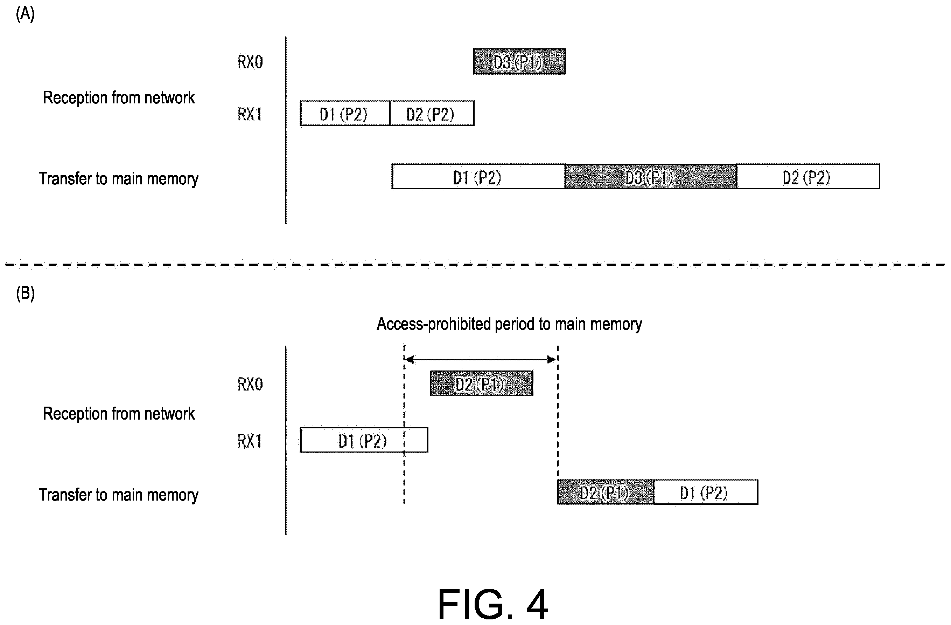

FIG. 4 is a diagram illustrating a situation in which the transfer order of reception data to the main memory 20 is changed from the reception order of the reception data by the PLC 1 (particularly, the transfer control unit 12).

In order to resolve the situation illustrated in FIG. 3, the communication controller 10 transfers (stores) high-priority data to the main memory 20 prior to low-priority data. Specifically, the transfer control unit 12 of the communication controller 10 switches a reception queue 13 in which reception data is to be stored according to a source address, a destination address, and an Ethernet frame type (for example, information for distinguishing IPv4 and ECAT).

Here, the communication controller 10 includes a plurality of reception queues 13 and includes, for example, a first reception queue 13(0) (that is, RX0) and a second reception queue 13(1) (that is, RX1). Different priorities NP are given in advance to the plurality of reception queues 13, that is, the priorities NP of the plurality of reception queues 13 are different from each other. For example, the priority NP(RX0) given in advance to the first reception queue 13(0) (that is, RX0) is higher than the priority NP(RX1) given in advance to the second reception queue 13(1) (that is, RX1).

The priorities NP given in advance to the plurality of reception queues 13 are different from processing priorities P indicating the "preferable order of processing of data (reception data) stored in the main memory 20 by the CPU 30."

When the first reception queue 13(0) and the second reception queue 13(1) request an access at the same time, a mediation unit 14 gives an access right to the reception queue 13 to which a higher priority NP has been given. The reception queue 13 having acquired the access right transfers data (reception data) stored in a data FIFO 131 to the main memory 20. That is, reception data stored in the head of the reception queue 13 to which a higher priority NP has been given in advance is transferred to the main memory 20 prior to reception data stored in the head of the reception queue 13 to which a lower priority NP has been given in advance.

Accordingly, the communication controller 10 can transfer the reception data to the main memory 20 in the order different from the reception order from the network 3 by switching the reception queue 13 in which the reception data is to be stored. Specifically, the communication controller 10 can transfer high-priority data to the main memory 20 prior to low-priority data by storing only reception data of which the processing priority P is determined to be high in the reception queue 13 to which a high priority NP has been given in advance.

The communication controller 10 determine the processing priority P of reception data using at least one of a "destination address," a "source address," and an "Ethernet frame type (frame type)" of the reception data. The communication controller 10 may determine the processing priority P of reception data using only the "source address" of the reception data. All of the "destination address," the "source address," and the "frame type" are original information of the reception data, but are not information which is newly added to indicate the processing priority P of the reception data.

The "destination address" of reception data which is referred to by the transfer control unit 12 at the time of switching a storage destination of the reception data can be roughly classified into a unicast address, a multicast address, a broadcast address, and the like. When the communication controller 10 is realized as a general network interface card (NIC), a plurality of addresses can be registered as the multicast addresses. Accordingly, for example, when the "destination address" of reception data is "multicast address A," the communication controller 10 (particularly, the transfer control unit 12) may select the first reception queue 13(0) as a storage destination of the reception data. Similarly, for example, when the "destination address" of reception data is "multicast address B," the communication controller 10 (particularly, the transfer control unit 12) may select the second reception queue 13(1) as a storage destination of the reception data.

The transfer control unit 12 may select a storage destination of reception data according to a source address of the reception data. For example, when the "source address" of reception data is "addr_txa" or "addr_txb," the communication controller 10 (particularly, the transfer control unit 12) may select the first reception queue 13(0) as a storage destination of the reception data. Similarly, for example, when the "source address" of reception data is neither "addr_txa" nor "addr_txb," the communication controller 10 (particularly, the transfer control unit 12) may select the second reception queue 13(1) as a storage destination of the reception data.

The transfer control unit 12 may select a storage destination of reception data according to a frame type of the reception data. For example, when the "frame type" of reception data is "other than IPv4," the communication controller 10 (particularly, the transfer control unit 12) may select the first reception queue 13(0) as a storage destination of the reception data. Similarly, for example, when the "frame type" of reception data is "IPv4," the communication controller 10 (particularly, the transfer control unit 12) may select the second reception queue 13(1) as a storage destination of the reception data.

(A) of FIG. 4 is a diagram illustrating a situation in which the communication controller 10 stores a plurality of pieces of reception data in the main memory 20 in the order different from the reception order even when the rate of network communication is higher than the rate of communication between the CPU 30 and the communication controller 10.

In (A) of FIG. 4, data D3 (with a processing priority P=1) is high-priority data, and data D2 (with a processing priority P=2) is low-priority data. The PLC 1 (particularly, the communication controller 10) receives the data D3 from the network 3 subsequently to the data D2.

The communication controller 10 (the transfer control unit 12) stores the data D3 in RX0 to which a higher priority NP than RX1 has been given according to at least one of a source address, a destination address, and an Ethernet frame type of the data D3. That is, the transfer control unit 12 stores the data D3 in the first reception queue 13(0) to which a higher priority NP than the second reception queue 13(1) has been given.

Similarly, the communication controller 10 (the transfer control unit 12) stores the data D2 in RX1 to which a lower priority NP than RX0 has been given according to at least one of a source address, a destination address, and an Ethernet frame type of the data D2. That is, the transfer control unit 12 stores the data D2 in the second reception queue 13(1) to which a lower priority NP than the first reception queue 13(0) has been given.

Since a higher priority NP than RX1 has been given to RX0, the mediation unit 14 gives an access right to RX0 to which the higher priority NP has been given when RX0 and RX1 request an access at the same time.

As a result, RX0 can transfer the data D3 to the main memory 20 earlier than the timing at which RX1 transfers the data D2 to the main memory 20. That is, the communication controller 10 can transfer the "data D3 which is high-priority data" received subsequently to the "data D2 which is low-priority data" to the main memory 20 prior to the "data D2 which is low-priority data."

In this way, by "transferring high-priority data received subsequently to low-priority data to the main memory 20 prior to the low-priority data," the communication controller 10 can cause the CPU 30 to process the high-priority data prior to the low-priority data. Particularly, when the rate of network communication is higher than the rate of communication between the CPU 30 and the communication controller 10, the communication controller 10 can prevent a "processing delay of high-priority data" which greatly affects control of the control system 0 as a whole.

(B) of FIG. 4 is a diagram illustrating a situation in which the communication controller 10 stores a plurality of pieces of reception data in the main memory 20 in the order different from the reception order even when an access-prohibited period is provided.

In (B) of FIG. 4, data D2 (with a processing priority P=1) is high-priority data, and data D1 (with a processing priority P=2) is low-priority data. The PLC 1 (particularly, the communication controller 10) receives the data D2 (with a processing priority P=1) from the network 3 subsequently to the data D1 (with a processing priority P=2) in the access-prohibited period.

The communication controller 10 (the transfer control unit 12) stores the data D2 in RX0 to which a higher priority NP than RX1 has been given according to at least one of a source address, a destination address, and an Ethernet frame type of the data D2. That is, the transfer control unit 12 stores the data D2 in the first reception queue 13(0) to which a higher priority NP than the second reception queue 13(1) has been given.

Similarly, the communication controller 10 (the transfer control unit 12) stores the data D1 in RX1 to which a lower priority NP than RX0 has been given according to at least one of a source address, a destination address, and an Ethernet frame type of the data D1. That is, the transfer control unit 12 stores the data D1 in the second reception queue 13(1) to which a lower priority NP than the first reception queue 13(0) has been given.

Since a higher priority NP than RX1 has been given to RX0, the mediation unit 14 gives an access right to RX0 to which the higher priority NP has been given when RX0 and RX1 request an access at the same time.

As a result, RX0 can transfer the data D2 to the main memory 20 earlier than the timing at which RX1 transfers the data D1 to the main memory 20. Specifically, RX0 transfers the data D2 to the main memory 20 immediately after the access-prohibited period has elapsed, and then RX1 transfers the data D1 to the main memory 20. That is, the communication controller 10 can transfer the "data D2 which is high-priority data" received subsequently to the "data D1 which is low-priority data" to the main memory 20 prior to the "data D1 which is low-priority data."

In this way, by "transferring high-priority data received subsequently to low-priority data to the main memory 20 prior to the low-priority data," the communication controller 10 can cause the CPU 30 to process the high-priority data prior to the low-priority data. Particularly, when the access-prohibited period is provided, the communication controller 10 can prevent a "processing delay of high-priority data" which is greater in comparison with a case in which the access-prohibited period is not provided.

### (Summary of communication controller according to embodiment)

The communication controller 10 of which the outline has been described above with reference to FIGS. 2, 3, and 4 will be summarized as follows for the purpose of easy understanding thereof.

That is, the communication controller 10 is a communication control device that stores data (reception data) received from a network 3 in any one of a plurality of reception queues 13 to which different priorities NP have been given in advance to transfer the reception data to the main memory 20. The communication controller 10 includes a queue selection table 121 (a reference table) and a selection unit 122.

The queue selection table 121 defines at least one of a "source address," a "destination address," and an "Ethernet frame type" of the reception data to be stored for at least one of the plurality of reception queues 13.

The selection unit 122 selects a reception queue 13 in which the reception data is to be stored with reference to the queue selection table 121 using at least one of the "source address," the "destination address," and the "Ethernet frame type" of the reception data.

With this configuration, the communication controller 10 selects a reception queue 13 in which reception data is to be stored out of the plurality of reception queues 13 using at least one of the "source address," the "destination address," and the "Ethernet frame type" of the reception data.

Here, all of the "source address," the "destination address," and the "Ethernet frame type" are original information of the reception data, but are not information which is newly added to select the reception queue 13 in which the reception data is to be stored.

Accordingly, the communication controller 10 can store reception data in a desired reception queue 13 selected out of the plurality of reception queues 13 to which different priorities NP have been given in advance without using additional information indicating processing priorities P.

In the communication controller 10, the selection unit 122 may select a reception queue 13 in which reception data is to be stored out of a plurality of reception queues 13 with reference to the queue selection table 121 using only the "source address" of the reception data.

For example, only the "source address" of reception data to be stored in the first reception queue 13(0) may be defined in the queue selection table 121. When a "source address" of reception data matches the "source address" defined in the queue selection table 121, the selection unit 122 may select the first reception queue 13(0) as a storage destination of the reception data.

With this configuration, the communication controller 10 selects a reception queue 13 in which reception data is to be stored out of the plurality of reception queues 13 with reference to the queue selection table 121 using only the "source address" of the reception data. Accordingly, the communication controller 10 can store reception data in a desired reception queue 13 selected out of the plurality of reception queues 13 to which different priorities NP have been given in advance using only the "source address" of the reception data.

### 2. Configuration example

Details of the communication controller 10 and the PLC 1 including the communication controller 10 of which the outlines have been described above will be described below with reference FIG. 1.

FIG. 1 is a diagram illustrating an example of a configuration of the PLC 1. As illustrated in FIG. 1, the PLC 1 includes the communication controller 10, the main memory 20, the CPU 30, and a nonvolatile memory 40 as hardware constituents. The PLC 1 may further include a USB connector for connecting the PLC 1 to an external device. The communication controller 10, the main memory 20, the CPU 30, and the nonvolatile memory 40 are coupled via various buses (internal buses).

The CPU 30 typically has a configuration based on a general-purpose computer architecture and sequentially analyzes and executes command codes according to an internal clock. The CPU 30 includes one or more CPU cores and a network control unit as hardware constituents. The CPU 30 illustrated in FIG. 1 includes a table generating unit 31 as a functional block.

The table generating unit 31 generates a queue selection table 121 on the basis of "various setting information 42 including a network configuration or the like of the control system 0" which is generated using a setting PC by a user. The queue selection table 121 generated by the table generating unit 31 is used for the transfer control unit 12 (particularly, the selection unit 122) of the communication controller 10 to select a reception queue 13 in which reception data is to be stored.

The main memory 20 is a storage means of the PLC 1 and stores, for example, data (reception data) which is received from the network 3 by the PLC 1 (particularly, the communication controller 10). The CPU 30 performs various arithmetic processes on data stored in the main memory 20.

The main memory 20 is a volatile storage area (RAM) and stores various programs which are to be executed by the CPU 30 after the PLC 1 is powered on as well as reception data which is received from the network 3 and on which various arithmetic processes are to be performed by the CPU 30. The main memory 20 is also used as a work memory when the CPU 30 executes various programs. For example, a dynamic random access memory (DRAM) or a static random access memory (SRAM) may be used as the main memory 20.

In the main memory 20 illustrated in FIG. 1, reception data and descriptor data (descriptor) corresponding to the reception data are stored. The descriptor includes information indicating a storage address of the corresponding reception data in the main memory 20, a data size of the corresponding reception data in the main memory 20, and the like.

The nonvolatile memory 40 stores data such as various programs and parameters in a nonvolatile manner. Such data is copied to the main memory 20 such that the CPU 30 can access the main memory 20 according to necessity. A semiconductor memory such as a flash memory can be used as the nonvolatile memory. Alternatively, a magnetic recording medium such as a hard disk drive or an optical recording medium such as a digital versatile disk random access memory (DVD-RAM) can be used.

"Various setting information 42 including a network configuration or the like of the control system 0" generated using a setting PC by a user is stored in the nonvolatile memory 40 illustrated in FIG. 1. The nonvolatile memory 40 includes a log table 41 in which various logs generated by a log generating unit 16 of the communication controller 10 are stored.

The communication controller 10 is a data transfer device that receives data from the network 3 and stores the received data (reception data) in the main memory 20, and is realized, for example, as a network interface card (NIC). The communication controller 10 is typically constituted by a hardware logical circuit such as a field-programmable gate array (FPGA) or an application-specific integrated circuit (ASIC). The communication controller 10 is configured to transmit and receive data to and from the main memory 20, the CPU 30, and the nonvolatile memory 40.

The communication controller 10 is connected to the network 3 via a reception port 11, controls exchange of data with the network 3, and controls particularly reception of reception data. For example, the communication controller 10 provides functions of a physical layer and a data link layer in the network 3. That is, the communication controller 10 controls transmission of transmission data and reception of reception data on the basis of a basic standard of the network 3. Specifically, the communication controller 10 receives reception data from a network device connected to the network 3 and stores the received data (reception data) in a reception queue 13. Particularly, the communication controller 10 selects a reception queue 13 in which reception data is to be stored out of a plurality of reception queues 13 to which different priorities NP have been given in advance and stores the reception data in the selected reception queue 13.

Although details will be described later, the PLC 1 controls the transfer order of reception data received from the network 3 to the main memory 20 using the communication controller 10 configured as a hardware logical circuit, not using the CPU 30. Accordingly, the PLC 1 can control the transfer order of reception data to the main memory 20 such that it is desired order using the communication controller 10 configured as a hardware logical circuit without increasing a processing load of the CPU 30.

The communication controller 10 illustrated in FIG. 1 includes a reception port 11, a transfer control unit 12, two or more reception queues 13, a mediation unit 14, an IF 15, and a log generating unit 16 as functional blocks.

In the example illustrated in FIG. 1, the communication controller 10 includes a first reception queue 13(0) (that is, RX0) and a second reception queue 13(1) (that is, RX1) as the reception queues 13. Different priorities NP are given to a plurality of reception queues 13 in advance, and for example, the priority NP(RX0) given in advance to the first reception queue 13(0) is higher than the priority NP(RX1) given in advance to the second reception queue 13(1).

Elements not directly associated with this embodiment such as an element for transmitting transmission data to the network 3 via a transmission port in the communication controller 10 illustrated in FIG. 1 are omitted for the purpose of simplification of description. Here, the communication controller 10 may include the omitted configurations according to the actual circumstances.

The transfer control unit 12 selects a reception queue 13 in which data (reception data) received from the network 3 via the reception port 11 is to be stored out of a plurality of reception queues 13 to which different priorities NP have been given in advance. The transfer control unit 12 illustrated in FIG. 1 selects in which of the first reception queue 13(0) and the second reception queue 13(1) the data (reception data) received from the network 3 via the reception port 11 is to be stored. The transfer control unit 12 includes a queue selection table 121, a selection unit 122, and a storage unit 123.

In the queue selection table 121, information indicating conditions of reception data to be stored is stored for at least one of the plurality of reception queues 13. Specifically, information for defining at least one of a "source address," a "destination address," and an "Ethernet frame type" of reception data to be stored is stored for at least one of the plurality of reception queues 13 in the queue selection table 121. In the queue selection table 121 illustrated in FIG. 1, information indicating conditions of reception data to be stored in the first reception queue 13(0) to which a higher priority NP than a priority NP(RX1) given to the second reception queue 13(1) has been given in advance is stored.

The selection unit 122 selects a reception queue 13 in which reception data is to be stored with reference to the queue selection table 121 using at least one of the "source address," the "destination address," and the "Ethernet frame type" of the reception data. The selection unit 122 illustrated in FIG. 1 selects the first reception queue 13(0) or the second reception queue 13(1) as a storage destination of the reception data using at least one of the "source address," the "destination address," and the "Ethernet frame type" of the reception data. Particularly, when at least one of the "source address," the "destination address," and the "Ethernet frame type" of the reception data satisfies the conditions defined in the queue selection table 121, the selection unit 122 selects the first reception queue 13(0) as the storage destination. The selection unit 122 notifies the storage unit 123 of the reception queue 13 selected as the storage destination of the reception data, that is, the first reception queue 13(0) or the second reception queue 13(1).

The storage unit 123 stores the reception data in the reception queue 13 selected by the selection unit 122 and particularly stores the reception data in a data FIFO 131 of the reception queue 13 selected by the selection unit 122. For example, when the first reception queue 13(0) is selected by the selection unit 122, the storage unit 123 stores the reception data in a first data FIFO 131(0) of the first reception queue 13(0). Similarly, when the second reception queue 13(1) is selected by the selection unit 122, the storage unit 123 stores the reception data in a second data FIFO 131(1) of the second reception queue 13(1).

The reception queue 13 temporarily stores data (reception data) received from the network 3 by the PLC 1 (particularly, the communication controller 10) and transfers the reception data to the main memory 20 on the basis of the descriptor. The reception queue 13 includes a data FIFO 131, a descriptor FIFO 132, and a direct memory access controller (DMAC) 133.

The data (reception data) received from the network 3 by the PLC 1 (particularly, the communication controller 10) is stored in the data FIFO 131 in a first-in first-out (FIFO) manner.

A descriptor (descriptor data) is stored in the descriptor FIFO 132 in the FIFO manner. When the CPU 30 completes setting of descriptor data in the main memory 20 and issues a reception permission to the communication controller 10, the communication controller 10 reads a descriptor from the main memory 20 and stores the read descriptor in the descriptor FIFO 132.

The DMAC 133 performs data exchange between the main memory 20 and the data FIFO 131 and the descriptor FIFO 132. For example, the DMAC 133 reads descriptor data set in the main memory 20 by the CPU 30 and stores the read descriptor data in the descriptor FIFO 132. When an access is permitted by the mediation unit 14, the DMAC 133 stores reception data stored in the data FIFO 131 in the main memory 20 sequentially from the head of the reception data. Particularly, the DMAC 133 stores reception data stored in the data FIFO 131 in an address of the main memory 20 defined in the descriptor on the basis of the descriptor stored in the descriptor FIFO 132. When an access is permitted by the mediation unit 14, the DMAC 133 transfers a write-back descriptor to the main memory 20, that is, overwrites the descriptor in the main memory 20 with the write-back descriptor.

The mediation unit 14 mediates between a plurality of access requests to the main memory 20, that is, mediates between access requests from a plurality of reception queues 13. Specifically, when access requests are received from the plurality of reception queues 13 substantially at the same time, the mediation unit 14 gives an access right to only the reception queue 13 to which the highest priority NP has been given, that is, permits an access thereto. For example, when an access request from the first reception queue 13(0) and an access request from the second reception queue 13(1) are issued substantially at the same time, the mediation unit 14 permits an access to the first reception queue 13(0) to which the highest priority NP than the second reception queue 13(1) has been given.

The IF 15 is an interface that is used for the communication controller 10 (particularly, the DMAC 133) to communicate with the main memory 20, the CPU 30, and the nonvolatile memory 40.

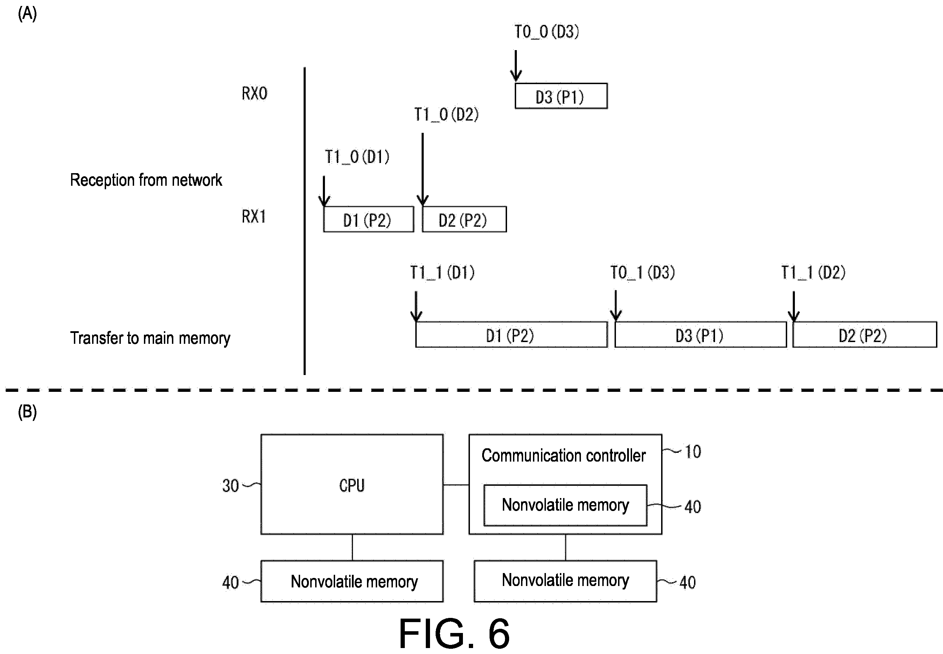

The log generating unit 16 generates a log indicating various times associated with reception and transfer of reception data (specifically, a start time log, an order change log, and an end time log). The log generating unit 16 stores the generated log in a log table 41 of the nonvolatile memory 40. Details of the log generated by the log generating unit 16 will be described later with reference to FIG. 6.

### (Queue selection table)

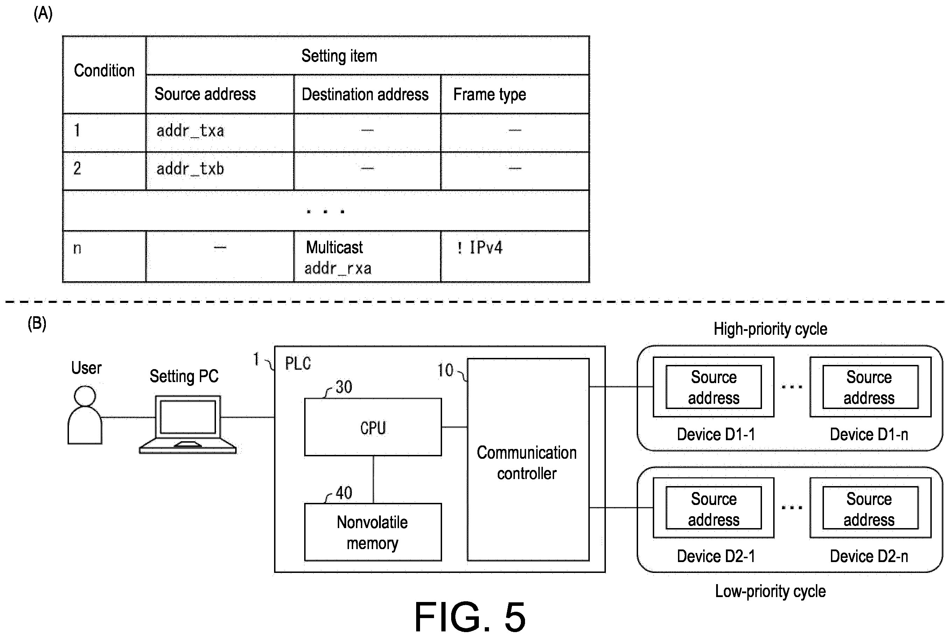

FIG. 5 is a diagram illustrating the queue selection table 121, where (A) of FIG. 5 illustrates an example of the queue selection table 121. (B) of FIG. 5 is a diagram illustrating an example of a method of generating the queue selection table 121. In FIG. 5, the "queue selection table 121 in which conditions of reception data to be stored in the reception queue 13 to which a high priority NP has been given are defined" is illustrated as an example of the queue selection table 121.

In the queue selection table 121 illustrated in (A) of FIG. 5, conditions of reception data to be stored in the first reception queue 13(0) (that is, RX0) are defined. That is, in the queue selection table 121 illustrated in (A) of FIG. 5, a condition that the "source address" is "addr_txa" is defined as "condition: 1" of the reception data to be stored in the first reception queue 13(0). Similarly, in the queue selection table 121 illustrated in (A) of FIG. 5, a condition that the "source address" is "addr_txb" is defined as "condition: 2."

In the queue selection table 121 illustrated in (A) of FIG. 5, a condition that the "destination address" is "multicast (addr_rxa)" and the "frame type" is "!IPv4 (that is, other than IPv4)" is defined as "condition: n." In addition, "-" means that whether conditions are satisfied is not ascertained.

The transfer control unit 12 includes the queue selection table 121 used to select a storage destination of reception data by the selection unit 122. The queue selection table 121 is set by software (that is, the CPU 30) before communication. In the queue selection table 121, for example, conditions of reception data to be stored in the reception queue 13 (for example, the first reception queue 13(0)) to which a high priority NP has been given are set in advance. In the queue selection table 121 illustrated in (A) of FIG. 5, at least one of the "source address," the "destination address," and the "Ethernet frame type" of reception data is set as conditions of the reception data to be stored in the first reception queue 13(0).

A plurality of conditions used to select the reception queue 13 in which reception data is to be stored can be set for each item (that is, the "source address," the "destination address," and the "Ethernet frame type" of reception data) or for each combination of a plurality of items.

A combination of a plurality of items can be set as a condition, and all items do not need to be set. For example, only a "source address" may be set and the other items may not be set. In this case, when a source address of reception data satisfies the "source address" set as the conditions, it is determined that the "reception data satisfies the conditions" regardless of the destination address and the Ethernet frame.

When each item is "other than OO," that is, other than a set value (that is, OO), the selection unit 122 may set a condition for determining that the "condition is satisfied." For example, when a condition "!IPv4 (that is, other than IPv4)" is set for the "frame type" and the frame type of reception data is other than "IPv4," the selection unit 122 determines that "the reception data satisfies the condition."

(B) of FIG. 5 illustrates a method of causing the PLC 1 (particularly, the CPU 30) to generate the queue selection table 121 as an example of the method of generating the queue selection table 121.

A user generates device setting information and program data using a setting PC, that is, generates "various setting information 42 including a network configuration of the control system 0." Here, in general, an industrial controller and a device (for example, the "network device" in FIG. 2) perform exchange of data with a predetermined cycle. In the example illustrated in (B) of FIG. 5, the user sets one or more data exchange cycles for a unit group including one or more devices D and a communication priority CP of the unit group using the setting PC. The user may set the data exchange cycle and the communication priority CP for each of a plurality of unit groups using the setting PC. That is, the various setting information 42 generated using the setting PC by the user include the communication priority CP of the unit group.

Here, the communication priority CP and the processing priority P may be correlated. When the communication priority CP of a certain unit group (for example, a unit group U1) is higher than the communication priority CP of another unit group (for example, a unit group U2), it may mean that a communication cycle of the certain unit group needs to be more highly maintained than the other unit group. When the communication priority CP of a certain unit group (for example, a unit group U1) is higher than the communication priority CP of another unit group (for example, a unit group U2), it may mean that a communication cycle of the certain unit group is smaller (shorter) than the communication cycle of the other unit group.

In other words, a communication cycle with high necessity for maintaining the communication cycle may be referred to as a "high-priority cycle," and a small (short) communication cycle may be referred to as a "high-priority cycle." That is, a "high-priority cycle" may mean that the set communication priority CP is high, and may mean at least one a communication cycle with high necessity for maintaining the communication cycle and a small (shorter) communication cycle.

For example, in (B) of FIG. 5, an example in which the user gives a high communication priority CP and a data exchange cycle to the unit group U1 including devices D1-1, D1-2, ..., D1-n using a setting PC is illustrated. That is, an example in which the "user sets a high-priority cycle for the unit group U1" is illustrated in (B) of FIG. 5.

In the example illustrated in (B) of FIG. 5, the user gives a low communication priority CP and a data exchange cycle to the unit group U2 including devices D2-1, D2-2, ..., D2-n using the setting PC. That is, an example in which the "user sets a low-priority cycle for the unit group U2" is illustrated in (B) of FIG. 5.

In the following description, the devices D1-1, D1-2, ..., D1-n and the devices D2-1, D2-2, ..., D2-n are simply abbreviated as a "device D" when they do not have to be distinguished. Similarly, the devices D1-1, D1-2, ..., D1-n are simply abbreviated as a "device D1" when they do not have to be distinguished, and the devices D2-1, D2-2, ..., D2-n are simply abbreviated as a "device D2" when they do not have to be distinguished.

The setting PC notifies the PLC 1 of the various setting information 42 generated by the user (uploading). The PLC 1 stores the various setting information 42 loaded from the setting PC in the nonvolatile memory 40. When "preparation of a queue selection table" is validated, the table generating unit 31 of the CPU 30 acquires a source address of the device D connected to the PLC 1 (particularly, the communication controller 10). The table generating unit 31 identifies a unit group U including the device D from the acquired source address. Then, the table generating unit 31 acquires a communication priority CP set for the unit group U including the device D with reference to the various setting information 42 stored in the nonvolatile memory 40.

The table generating unit 31 stores a transmission address corresponding to the device D included in the unit group U to which a high communication priority CP has been given in an entry of "source address" in the queue selection table 121 with reference to the various setting information 42. That is, the table generating unit 31 stores the source address corresponding to the device D included in the unit group U for which a high-priority cycle has been set in the entry of "source address" in the queue selection table 121.

For example, the table generating unit 31 acquires the source address of a certain device Dp when the certain device Dp is connected to the PLC 1 (particularly, the communication controller 10). The table generating unit 31 identifies that the device Dp is a device D1-1 and the unit group U including the device D1-1 is the unit group U1 using the acquired source address with reference to the various setting information 42. The table generating unit 31 ascertains that a "high-priority cycle" is set for the unit group U1 with reference to the various setting information 42.

The table generating unit 31 stores a transmission address corresponding to a device D1 included in the unit group U1 in the entry of "source address" in the queue selection table 121, that is, sets (generates) the queue selection table 121. For example, the table generating unit 31 stores the transmission address of the device Dp which is the device D1-1 in the entry of "source address" in the queue selection table 121.

Conditions for identifying a "device communicatively connected to the PLC 1 (particularly, the communication controller 10) without using an industrial network" are set for "destination address" and "frame type" in the queue selection table 121. Examples of the industrial network include EtherCAT (registered trademark) and Ethernet/IP.

The table generating unit 31 ascertains whether there is a "device connected to the PLC 1 (particularly, the communication controller 10) without using an industrial network" with reference to the various setting information 42 stored in the nonvolatile memory 40. When there is a "device connected to the PLC 1 without using an industrial network," the table generating unit 31 sets the conditions of "destination address" and "frame type" in the queue selection table 121 such that reception data from the device satisfies the conditions.

The table generating unit 31 stores the queue selection table 121 generated with reference to the various setting information 42 stored in the nonvolatile memory 40 in the nonvolatile memory 40 and notifies the communication controller 10. The communication controller 10 (particularly, the transfer control unit 12) acquires the queue selection table 121 generated by the table generating unit 31.

Description made above with reference to (B) of FIG. 5 can be summarized as follows. That is, the queue selection table 121 used by the communication controller 10 is generated using various setting information 42 defined for the network 3 by the user and including configuration information of the network 3.

With this configuration, the communication controller 10 selects a reception queue 13 in which reception data is to be stored with reference to the queue selection table 121 generated using various setting information 42 defined for the network 3 by a user and including configuration information of the network 3.

For example, the PLC 1 may ascertain whether there is a device D (a high-priority device, for example, D1-1) with higher necessity for maintaining the communication cycle than those of other devices D out of the devices D periodically communicating with the PLC 1 via the network 3 with reference to the various setting information 42. When a high-priority device is defined in the various setting information 42, the PLC 1 generates or updates the queue selection table 121 such that reception data with a high-priority device as a "source address" is stored in a reception queue 13 to which a high priority NP has been given.

Similarly, when necessity for maintaining a communication cycle with a certain unit group U (device group) is set to be higher than necessity for maintaining a communication cycle with another unit group U in the various setting information 42, the PLC 1 may generate or update the queue selection table 121 as follows. That is, the PLC 1 may generate or update the queue selection table 121 such that reception data with a device D included in the certain unit group U (for example, the unit group U1) as a "source address is stored in the first reception queue 13(0). The PLC 1 may generate or update the queue selection table 121 such that reception data with a device included in the other unit group U (for example, the unit group U2) as a "source address" is stored in the second reception queue 13(1).

When a communication priority CP of communication with a certain destination address is set to be higher than a communication priority CP of communication with another destination address in the various setting information 42, the PLC 1 may generate or update the queue selection table 121 as follows. That is, the PLC 1 may generate or update the queue selection table 121 such that reception data with the certain destination address as a "destination address" is stored in the first reception queue 13(0). The PLC 1 may generate or update the queue selection table 121 such that reception data with the other destination address as a "destination address" is stored in the second reception queue 13(1).

When a processing priority P of reception data of a certain frame type is set to be higher than a processing priority P of reception data of another frame type in the various setting information 42, the PLC 1 may generate or update the queue selection table 121 as follows. That is, the PLC 1 may generate or update the queue selection table 121 such that the reception data of the certain frame type is stored in the first reception queue 13(0). The PLC 1 may generate or update the queue selection table 121 such that the reception data of the other frame type is stored in the second reception queue 13(1).

Accordingly, the communication controller 10 can appropriately select a reception queue 13 in which reception data is to be stored with reference to the queue selection table 121 generated without causing a user to labor two times.

### (Various logs)

FIG. 6 is a diagram illustrating a start time log or the like generated by the communication controller 10 (particularly, the log generating unit 16). Specifically, (A) of FIG. 6 illustrates a reception start time and a transfer start time of a start time log, and (B) of FIG. 6 illustrates an example of a storage destination of the start time log.

As illustrated in (A) of FIG. 6, the log generating unit 16 generates a start time log including a reception start time which is a time point at which reception of data from the network 3 has started and a transfer start time which is a time point at which transfer to the main memory 20 has started are organized as a set for each piece of data (each piece of reception data).

In the example illustrated (A) of FIG. 6, the PLC 1 (particularly, the communication controller 10) receives data D1, D2, and D3 in this order from the network 3. Particularly, the PLC 1 starts reception of data D1 at a reception start time T1-0(D1), starts reception of data D2 at a reception start time T1-0(D2), and starts reception of data D3 at a reception start time T0-0(D3).

The communication controller 10 stores the data D1 (with a processing priority P=2) and the data D2 (with a processing priority P=2) in the second reception queue 13(1) (that is, RX1) and stores the data D3 (with a processing priority P=1) in the first reception queue 13(0) (that is, RX0).

As a result, a time point at which transfer of the data D1 (with a processing priority P=2) from RX1 to the main memory 20 is the transfer start time T1-1(D1). A time point at which transfer of the data D2 (with a processing priority P=2) from RX1 to the main memory 20 is the transfer start time T1-1(D2). A time point at which transfer of the data D3 (with a processing priority P=1) from RX0 to the main memory 20 is the transfer start time T0-1(D3). As illustrated in (A) of FIG. 6, the transfer start time T0-1(D3) is earlier than the transfer start time T1-1(D2).

The log generating unit 16 generates a start time log in which the reception start time T1-0(D1) and the transfer start time T1-1(D1) are correlated, and generates a start time log in which the reception start time T1-0(D2) and the transfer start time T1-1(D2) are correlated. The log generating unit 16 generates a start time log in which the reception start time T0-0(D3) and the transfer start time T0-1(D3) are correlated.

By using the start time log generated by the log generating unit 16, for example, a user can perform data trace including behavior in the communication controller 10 for each of the data pieces D1, D2, and D3.

In the example illustrated in (A) of FIG. 6, the communication controller 10 having received the data pieces D1, D2, and D3 in this order transfers the data pieces D1, D3, and D2 to the main memory 20 in this order, that is, changes the transfer order from the reception order.

Therefore, the communication controller 10 (particularly, the log generating unit 16) increments a counter whenever the transfer order is changed from the reception order, and generates a log (an order change log) serving as an index indicting occurrence of data contention. In the example illustrated in FIG. 6, the transfer order is changed from the reception order "one time."

The log generating unit 16 additionally generates an end time log in which a reception end time which is a time point at which reception from the network 3 has ended and a transfer end time which is a time point at which transfer to the main memory 20 has ended are organized as a set for each data piece (each reception data piece). In the example illustrated in FIG. 6, the log generating unit 16 generates an end time log in which a reception end time at which reception of the data D1 from the network 3 has ended and a transfer end time at which transfer of the data D1 to the main memory 20 has ended are organized as a set. The log generating unit 16 generates an end time log in which a reception end time at which reception of the data D2 from the network 3 has ended and a transfer end time at which transfer of the data D2 to the main memory 20 has ended are organized as a set. The log generating unit 16 generates an end time log in which a reception end time at which reception of the data D3 from the network 3 has ended and a transfer end time at which transfer of the data D3 to the main memory 20 has ended are organized as a set.

For example, the log generating unit 16 calculates a reception end time and a transfer end time of reception data using the reception start time and the transfer start time of the reception data and a data size of the reception data.

Here, the PLC 1 prepares a record (log) for (1) a communication rate associated with communication with the network 3 (that is, network communication) and (2) a communication rate of communication between the CPU 30 and the communication controller 10 at the time of start and during operation. The PLC 1 prepares a record (log) for data sizes of the reception data.

Accordingly, the log generating unit 16 can calculate a time period (a receiving operation period) required from start of reception of reception data to end thereof from the communication rate associated with network communication and the data size of the reception data. Then, the log generating unit 16 can calculate a reception end time of the reception data by adding the calculated receiving operation period to the reception start time of the reception data.

The log generating unit 16 can calculate a time period (a transfer operation period) required from start of transfer of reception data to end thereof from the communication rate of communication between the CPU 30 and the communication controller 10 and the data size of the reception data. Then, the log generating unit 16 can calculate a transfer end time of the reception data by adding the calculated transfer operation period to the transfer start time of the reception data.

Then, the log generating unit 16 generates an end time log in which the calculated reception end time and the calculated transfer end time are correlated. By using the end time log generated by the log generating unit 16, for example, a user can perform data trace including behavior in the communication controller 10 for each of the data pieces D1, D2, and D3.

That is, the user can monitor reception data using the logs (the start time log, the order change log, and the end time log) generated by the log generating unit 16.

An example in which the start time log, the order change log, and the end time log are generated by the communication controller 10 (particularly, the log generating unit 16) has been described above, but the entity that generates the start time log, the order change log, and the end time log does not have to be the communication controller 10. At least one of the start time log, the order change log, and the end time log may be generated by the CPU 30, and the start time log, the order change log, and the end time log have only to be generated by the PLC 1. For example, a configuration in which the CPU 30 includes the log generating unit 16 may be employed.

(B) of FIG. 6 is a diagram illustrating an example of a storage destination of the log (the start time log, the order change log, and the end time log) generated by the communication controller 10 (particularly, the log generating unit 16). As illustrated in (B) of FIG. 6, the storage destination of the log generated by the log generating unit 16 may be a nonvolatile memory outside of the communication controller 10 or may be a nonvolatile memory inside of the communication controller 10.

That is, the log generated by the log generating unit 16 may be stored in a nonvolatile memory which is provided outside of the communication controller 10 and which is managed by the CPU 30. A log stored in the nonvolatile memory which is provided outside of the communication controller 10 and which is managed by the CPU 30 may be generated by the CPU 30 by acquiring necessary data from a reception descriptor, that is, the CPU 30 may include the log generating unit 16.

The log generated by the log generating unit 16 may be stored in a nonvolatile memory which is provided inside of the communication controller 10. That is, the log generating unit 16 may store the generated log in a nonvolatile memory which is provided inside of the communication controller 10.

The log generated by the log generating unit 16 may be stored in a nonvolatile memory which is provided outside of the communication controller 10. That is, the log generating unit 16 may store the generated log in a nonvolatile memory which is provided outside of the communication controller 10.

Description made above with reference to FIG. 6 (particularly, (A) of FIG. 6) can be summarized as follows. That is, the log generating unit 16 generates a start time log in which the reception start time which is a time point at which reception of reception data from the network 3 has started and the transfer start time which is a time point at which transfer of the reception data to the main memory 20 has started are correlated.

With this configuration, the communication controller 10 generates a start time log in which the reception start time and the transfer start time of reception data are correlated. Accordingly, the communication controller 10 can enable data trace of reception data including behavior in the communication controller 10 using the start time log.

The log generating unit 16 generates an order change log indicating the number of times other reception data received after certain reception data has been received has been transferred to the main memory 20 prior to the certain reception data.

With this configuration, the communication controller 10 generates the order change log indicating the number of times other reception data received after certain reception data has been received has been transferred to the main memory 20 prior to the certain reception data.

Accordingly, the communication controller 10 can enable using the order change log as an index indicting occurrence of data contention such as "reception data received subsequently to previously received reception data is earlier transferred to the main memory 20."

The log generating unit 16 generates an end time log in which the reception end time which is a time point at which reception of reception data from the network 3 has ended and the transfer end time which is a time point at which transfer of the reception data to the main memory 20 has ended are correlated.

With this configuration, the communication controller 10 generates the end time log in which the reception end time and the transfer end time of reception data are correlated. Accordingly, the communication controller 10 can enable data trace of reception data including behavior in the communication controller 10 using the end time log.

Here, the reception end time of the end time log is calculated from the reception start time which is a time point at which reception of the reception data from the network 3 has started, the communication rate of the network 3, and the data size of the reception data. The transfer end time is calculated from the transfer start time which is a time point at which transfer of the reception data to the main memory 20 has started, a transfer rate to the main memory 20, and the data size of the reception data.

With this configuration, the communication controller 10 calculates the reception end time and the transfer end time. Accordingly, the communication controller 10 can enable monitoring communication of reception data as a whole using the reception start time, the transfer start time, the calculated reception end time, and the calculated transfer end time.

The logs (the start time log, the order change log, and the end time log) generated by the communication controller 10 (particularly, the log generating unit 16) is stored in the nonvolatile memory 40 inside or outside of the communication controller 10.

With this configuration, the communication controller 10 stores the start time log, the order change log, and the end time log in the nonvolatile memory 40 inside or outside of the communication controller 10. Accordingly, the communication controller 10 can appropriately store the start time log, the order change log, and the end time log in the nonvolatile memory 40 inside or outside of the communication controller 10 such that the logs can be easily used.

### 3. Operation example

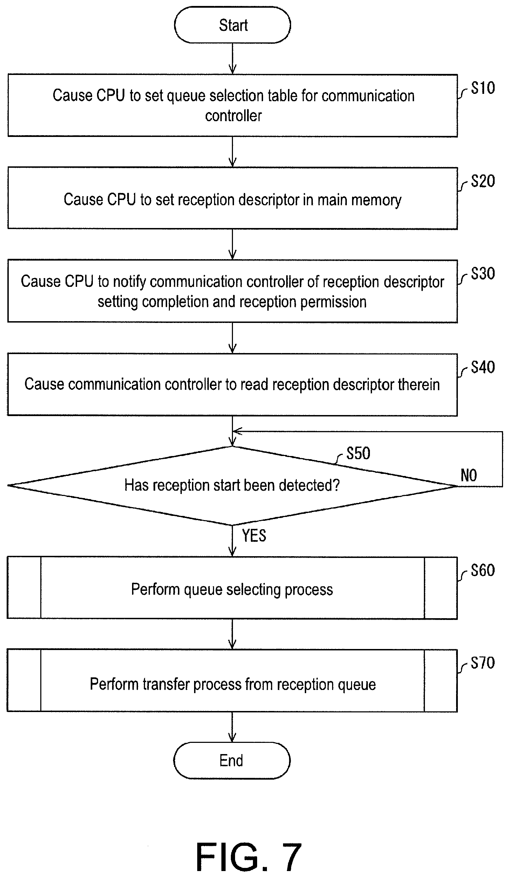

As described above with reference to FIG. 1 or the like, the communication controller 10 includes a plurality of reception queues 13 to which different priorities NP have been given in advance. The communication controller 10 selects a reception queue 13 in which reception data is to be stored with reference to the queue selection table 121 using at least one of a "source address," a "destination address," and an "Ethernet frame type" of the reception data. Details of a routine which is performed by the PLC 1 (particularly, the communication controller 10) will be described below with reference to FIGS. 7 to 10.

### (Entire outline of routine performed by PLC)

FIG. 7 is a flowchart illustrating an outline of a routine which is performed by the PLC 1 as a whole. As illustrated in FIG. 7, first, the CPU 30 sets a queue selection table 121 of the communication controller 10 in advance (S10). Thereafter, the CPU 30 sets (stores) a reception descriptor (that is, descriptor data) to the main memory 20 (S20). The CPU 30 notifies the communication controller 10 of completion of setting of a reception descriptor and permission of reception thereof (S30).

When a notification from the CPU 30 is received in S30, the communication controller 10 reads the reception descriptor stored in the main memory 20 into the communication controller 10 (S40), that is, stores the reception descriptor in the descriptor FIFO 132 of the reception queue 13.

The communication controller 10 (particularly, the transfer control unit 12) determines whether reception has started (S50), and waits until reception starts when start of reception has not been detected (NO in S50). When start of reception is detected (YES in S50), the transfer control unit 12 (particularly, the selection unit 122) performs a "queue selecting process" (S60) and selects a reception queue 13 in which the received data (reception data) is to be stored.

The storage unit 123 stores the reception data in the data FIFO 131 of the reception queue 13 selected by the selection unit 122 in S60, and the reception queue 13 transfers the reception data stored in the data FIFO 131 to the main memory 20 (S70: transfer process).

### (Details of queue selecting process)

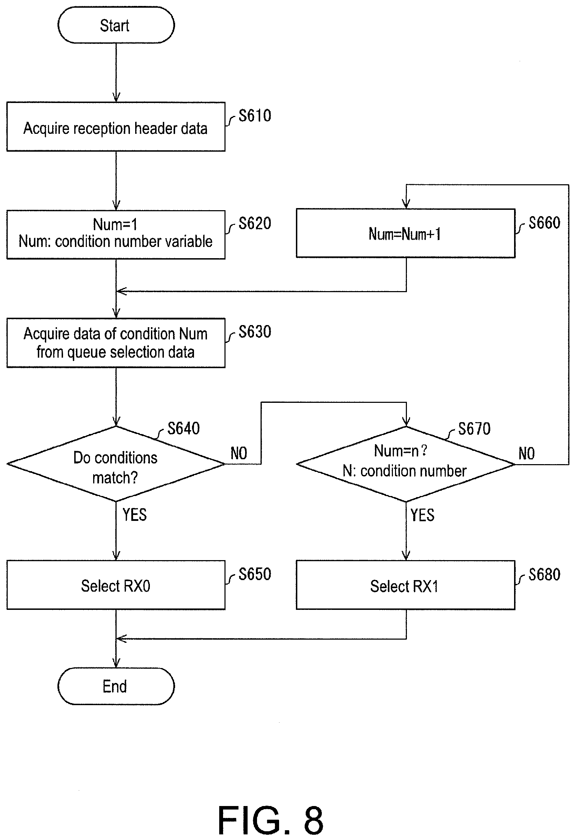

FIG. 8 is a flowchart illustrating a detailed example of the queue selecting process (S60) in FIG. 7, that is, a flowchart illustrating an example of a queue selecting process which is performed by the transfer control unit 12 (particularly, the selection unit 122).

As illustrated in FIG. 8, first, the selection unit 122 acquires various types of information from a header part (a reception header) of reception data, and specifically acquires at least one of the "source address, the destination address, and the Ethernet frame type" of the reception data (S610).

The selection unit 122 sets a "condition number variable Num" to "1" (S620). The selection unit 122 acquires data (that is, a condition) corresponding to "condition = condition number variable Num" from the queue selection table 121 (S630).

For example, when "condition number variable Num=1," the selection unit 122 acquires a condition corresponding to "Condition 1" from the queue selection table 121, and acquires a condition "source address = addr_txa" when the queue selection table 121 is the same as illustrated in (A) of FIG. 5. Similarly, when "condition number variable Num=2," the selection unit 122 acquires a condition corresponding to "Condition 2" from the queue selection table 121, and acquires a condition "source address = addr_txb" when the queue selection table 121 is the same as illustrated in (A) of FIG. 5. When "condition number variable Num=n," the selection unit 122 acquires a condition corresponding to "Condition n" from the queue selection table 121, and acquires the following conditions when the queue selection table 121 is the same as illustrated in (A) of FIG. 5. That is, the selection unit 122 acquires "Condition n" that the "destination address is multicast (addr_rxa)" and the "frame type is !IPv4 (that is, other than IPv4)."

The selection unit 122 determines whether at least one of the "source address, the destination address, and the Ethernet frame type" of the reception data matches the condition acquired in S630 (that is, satisfies the conditions) (S640).

When it is determined in S640 that the at least one matches the conditions (YES in S640), the selection unit 122 selects RX0 (S650), that is, selects the first reception queue 13(0) (particularly, the first data FIFO 131(0)) as the storage destination of the reception data.

When it is determined in S640 that none matches the conditions (NO in S640), the selection unit 122 determines "whether the condition number variable Num matches Condition number: n" (S670). That is, the selection unit 122 determines "whether determination of S640 has been performed" on all conditions from Condition 1 to Condition n defined in the queue selection table 121.

When the "condition number variable Num matches Condition number: n (that is, the determination of S640 has been performed on all the conditions defined in the queue selection table 121)" (YES in S670), the selection unit 122 selects RX1 (S680). That is, when it is determined that the "reception data satisfies none of the conditions defined in the queue selection table 121," the selection unit 122 selects the second reception queue 13(1) (particularly, the second data FIFO 131(1)) as the storage destination of the reception data.

When the "condition number variable Num does not match Condition number: n" (NO in S670), the selection unit 122 performs "condition number variable Num = condition number variable Num + 1" (S660). That is, when "a condition for which the determination of S640 has not been performed remains in the conditions defined in the queue selection table 121," the selection unit 122 sets the "condition number variable Num" to condition number variable Num + 1 (a value obtained by adding 1 to the condition number variable Num)." Then, the selection unit 122 performs the steps of S630 and subsequent thereto again.

### (Details of transfer process)

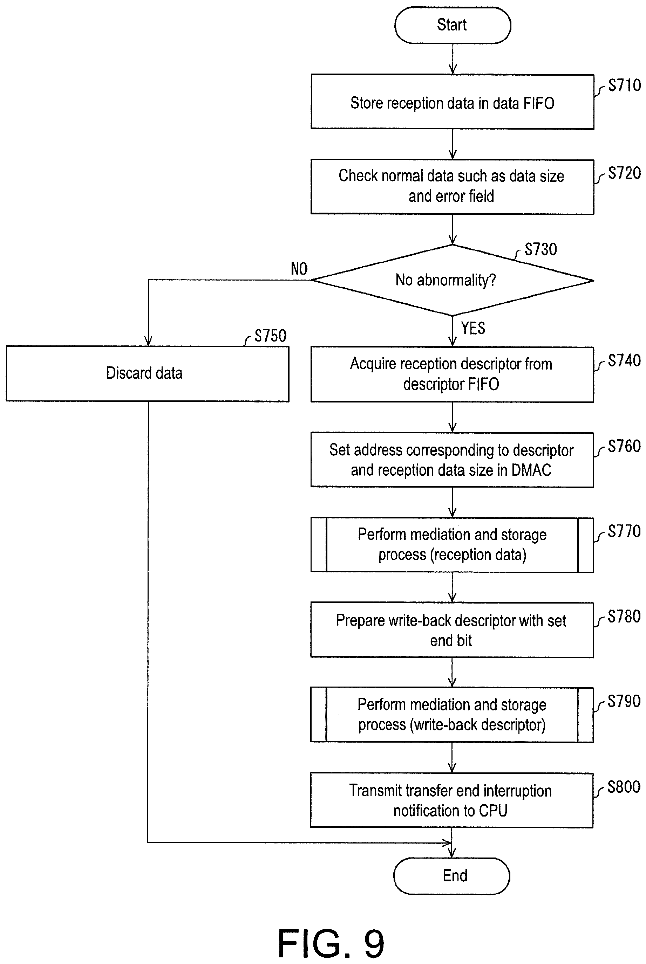

FIG. 9 is a flowchart illustrating a detailed example of the transfer process (S70) in FIG. 7, that is, a flowchart illustrating an example of a reception data transferring process which is performed by the storage unit 123, the reception queue 13 selected by the selection unit 122 in S60, and the mediation unit 14.

As illustrated in FIG. 9, first, the storage unit 123 stores reception data in the data FIFO 131 of the reception queue 13 selected by the selection unit 122 in S60 (S710). For example, when the first reception queue 13(0) (that is, RX0) is selected by the selection unit 122 in S60, the storage unit 123 stores the reception data in the first data FIFO 131(0) of the first reception queue 13(0). Similarly, for example, when the second reception queue 13(1) (that is, RX1) is selected by the selection unit 122 in S60, the storage unit 123 stores the reception data in the second data FIFO 131(1) of the second reception queue 13(1).

The reception queue 13 performs check for ascertaining that the "reception data stored in the data FIFO 131 is normal data" such as a data size and an error field of the reception data stored in the data FIFO 131 (S720). Then, the reception queue 13 determines "whether there is no abnormality" in the reception data stored in the data FIFO 131 (S730).

When "there is an abnormality" in the reception data stored in the data FIFO 131 (NO in S730), the reception queue 13 discards the reception data stored in the data FIFO 131 (S750) and ends this process.

When "there is no abnormality" in the reception data stored in the data FIFO 131 (YES in S730), the reception queue 13 acquires a reception descriptor with reference to the descriptor FIFO 132 (S740). For example, when the first reception queue 13(0) (that is, RX0) is selected by the selection unit 122 in S60, the first reception queue 13(0) acquires the reception descriptor stored in the head of the first descriptor FIFO 132(0). Similarly, when the second reception queue 13(1) (that is, RX1) is selected by the selection unit 122 in S60, the second reception queue 13(1) acquires the reception descriptor stored in the head of the second descriptor FIFO 132(1).

The reception queue 13 sets an address (a storage destination address in the main memory 20) and a reception data size defined in the acquired reception descriptor in the DMAC 133 (S760). For example, when the first reception queue 13(0) (that is, RX0) is selected by the selection unit 122 in S60, the first reception queue 13(0) sets the address and the data size defined in the reception descriptor acquired in S740 in the first DMAC 133(0). Similarly, when the second reception queue 13(1) (that is, RX1) is selected by the selection unit 122 in S60, the second reception queue 13(1) sets the address and the data size defined in the reception descriptor acquired in S740 in the second DMAC 133(1).

The DMAC 133 set in S760 and the mediation unit 14 perform a mediation process and a storage process (S770). When the mediation process and the storage process using the DMAC 133 and the mediation unit 14 are completed, the reception queue 13 prepares a write-back descriptor in which an end bit and log data are set (S780). Then, the reception queue 13 sets details defined in the prepared write-back descriptor in the DMAC 133 again.

The DMAC 133 in which details defined in the write-back descriptor are set and the mediation unit 14 perform the mediation process and the storage process again (S790). When the mediation process and the storage process of S790 are completed, the reception queue 13 issues a transfer end interruption notification to the CPU 30 (S800).

Description made above with reference to FIGS. 7, 8, and 9 can be summarized as follows. That is, the control method which is performed by the communication controller 10 is a method for controlling a communication control device that stores reception data received from a network 3 in any one of a plurality of reception queues 13 to which different priorities NP have been given in advance to transfer the reception data to the main memory 20. The control method which is performed by the communication controller 10 includes a queue selection process (a selection step, S60 in FIG. 7) and a storage step (S70 in FIG. 7, particularly, S710 in FIG. 9) of storing reception data in the reception queue 13 selected in the selection step.

In the selection step, a reception queue 13 in which the reception data is to be stored is selected out of the plurality of reception queues 13 with reference to a queue selection table 121 (reference table). Particularly, in the selection step, the reception queue 13 in which the reception data is to be stored is selected using at least one of the "source address," the "destination address," and the "Ethernet frame type" of the reception data. In the queue selection table 121, at least one of the "source address," the "destination address," and the "Ethernet frame type" of the reception data to be stored is defined for at least one of the plurality of reception queues 13 as described above.

With this configuration, in the control method performed by the communication controller 10, a reception queue 13 in which reception data is to be stored is selected using at least one of the "source address," the "destination address," and the "Ethernet frame type" of the reception data.

Here, all of the "source address," the "destination address," and the "Ethernet frame type" are original information of the reception data, but are not information which is newly added to select the reception queue 13 in which the reception data is to be stored.

Accordingly, the control method can store reception data in a desired reception queue 13 selected out of the plurality of reception queues 13 to which different priorities NP have been given in advance without using additional information indicating processing priorities P.

### (Details of mediation process and storage process)

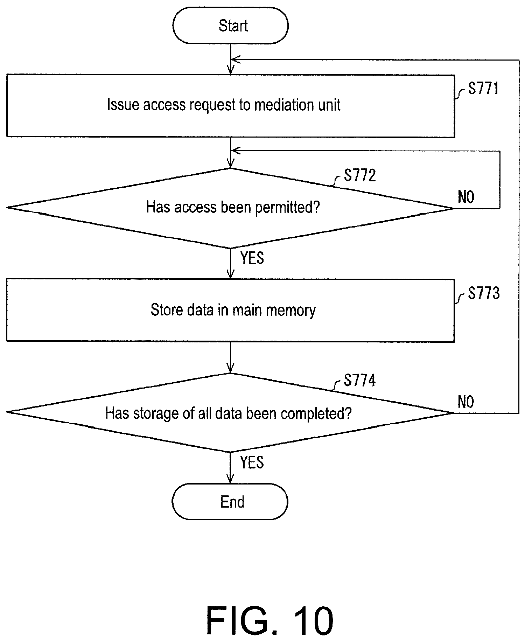

FIG. 10 is a flowchart illustrating a detailed example of the mediation process and the storage process (S770 and S790) in FIG. 9 and specifically a flowchart illustrating an example of the mediation process performed by the mediation unit 14 and the storage process performed by the DMAC 133.

As illustrated in FIG. 10, the DMAC 133 in which details defined in a descriptor are set issues an access request to the mediation unit 14 (S771). Then, the DMAC 133 determines "whether an access has been permitted by the mediation unit 14" (S772). When an access has not been permitted by the mediation unit 14 (NO in S772), the DMAC 133 waits until an access is permitted by the mediation unit 14.

When an access has been permitted by the mediation unit 14 (YES in S772), the DMAC 133 stores data in the main memory 20 according to details defined in the descriptor (S773). For example, the DMAC 133 stores reception data stored in the data FIFO 131 in a predetermined address of the main memory 20 according to details defined in the reception descriptor, that is, transfers the reception data to the main memory 20. For example, the DMAC 133 stores the updated reception descriptor with additional information added thereto in a write-back area of the main memory 20 according to details defined in the write-back descriptor. The DMAC 133 may overwrite details of the descriptor data stored in the main memory 20 with details of the updated reception descriptor according to the details defined in the write-back descriptor. The additional information included in the updated reception descriptor may indicate, for example, at least one of a size of reception data written to the address designated by the reception descriptor and an end determination flag indicating writing completion of the reception data.

Then, the DMAC 133 determines whether all data to be stored in the main memory 20 has been completely stored in the main memory 20 (S774). When all data to be stored in the main memory 20 has been completely stored in the main memory 20 (YES in S774), the DMAC 133 ends the process. When all data to be stored in the main memory 20 has not been completely stored in the main memory 20 (NO in S774), the processes of S771 and subsequent thereto are performed on data of which storage in the main memory 20 has not been completed.

### 4. Modified example

### (Example of network configuration)

In the control system 0 illustrated in FIG. 2, a plurality of networks 3 are connected to the PLC 1 via the network hub 2. However, in the control system 0, one network 3 may be connected to the PLC 1 without using the network hub 2, for example, the PLC 1 and one or more network devices may be communicatively connected in a unicursal manner.

### (Process of generating various logs and storage destinations of logs)

An example in which the "communication controller 10 includes the log generating unit 16 as a functional block" is illustrated in FIG. 1, but the log generating unit 16 as a functional block may be included by the CPU 30. That is, the CPU 30 may generate various logs such as the start time log, the order change log, and the end time log.

An example in which various logs such as the start time log, the order change log, and the end time log are stored in the nonvolatile memory 40 outside of the communication controller 10 is illustrated in FIG. 1. However, these various logs do not have to be stored in the nonvolatile memory outside of the communication controller 10. A nonvolatile memory may be provided inside of the communication controller 10, and at least one of the various logs may be stored in the nonvolatile memory inside of the communication controller 10.

### (Supplementary information)

A communication control device according to an aspect of the present invention is a communication control device that stores reception data received from a network in any one of a plurality of reception queues to which different priorities have been given in advance to transfer the reception data to a main memory, the communication control device including: a reference table in which at least one of a source address, a destination address, and an Ethernet frame type of the reception data to be stored is defined for at least one of the plurality of reception queues; and a selection unit configured to select a reception queue in which the reception data is to be stored with reference to the reference table using at least one of the source address, the destination address, and the Ethernet frame type of the reception data.

With this configuration, the communication control device selects a reception queue in which reception data is to be stored out of the plurality of reception queues using at least one of the source address, the destination address, and the Ethernet frame type of the reception data.

Here, all of the source address, the destination address, and the Ethernet frame type are original information of the reception data, but are not information which is newly added to select the reception queue in which the reception data is to be stored.

Accordingly, the communication control device can store the reception data in a desired reception queue selected out of the plurality of reception queues to which different priorities have been given in advance without using additional information indicating processing priorities.

The communication control device according to the aspect of the present invention may generate a start time log which is a log in which a reception start time which is a time point at which reception of the reception data from the network has started and a transfer start time which is a time point at which transfer of the reception data to the main memory has started are correlated.

With this configuration, the communication control device generates the start time log in which the reception start time and the transfer start time of the reception data are correlated. Accordingly, the communication control device can enable data trace of the reception data including behavior in the communication control device using the start time log.

The communication control device according to the aspect of the present invention may generate an order change log indicating the number of times other reception data received after certain reception data has been received has been transferred to the main memory prior to the certain reception data.

With this configuration, the communication control device generates the order change log indicating the number of times other reception data received after certain reception data has been received has been transferred to the main memory prior to the certain reception data.

Accordingly, the communication control device can enable using the order change log as an index indicating occurrence of data contention such as "reception data received subsequently to previously received reception data is earlier transferred to the main memory."

The communication control device according to the aspect of the present invention may generate an end time log which is a log in which a reception end time which is a time point at which reception of the reception data from the network has ended and a transfer end time which is a time point at which transfer of the reception data to the main memory has ended are correlated.

With this configuration, the communication control device generates the end time log in which the reception end time and the transfer end time of the reception data are correlated. Accordingly, the communication control device can enable data trace of the reception data including behavior in the communication control device using the end time log.

In the communication control device according to the aspect of the present invention, the reception end time may be calculated on the basis of a reception start time which is a time point at which reception of the reception data from the network has started, a data rate of the network, and a data size of the reception data, and the transfer end time may be calculated on the basis of a transfer start time which is a time point at which transfer of the reception data to the main memory has started, a transfer rate to the main memory, and the data size of the reception data.

With this configuration, the communication control device calculates the reception end time and the transfer end time. Accordingly, the communication control device can monitor entire communication of the reception data using the reception start time, the transfer start time, the calculated reception end time, and the calculated transfer end time.

In the communication control device according to the aspect of the present invention, the selection unit may select a reception queue in which the reception data is to be stored out of the plurality of reception queues with reference to the reference table using only the source address of the reception data.

With this configuration, the communication control device selects a reception queue in which the reception data is to be stored out of the plurality of reception queues with reference to the reference table using only the source address of the reception data. Accordingly, the communication control device can store the reception data in the desired reception queue selected out of the plurality of reception queues to which different priorities have been given in advance using only the source address of the reception data.

In the communication control device according to the aspect of the present invention, the reference table may be generated using various setting information which is defined for the network by a user and which includes configuration information of the network.

With this configuration, the communication control device selects a reception queue in which the reception data is to be stored with reference to the reference table generated using various setting information which are defined for the network by a user and which include configuration information of the network.

For example, a control device including the communication control device may ascertain whether there is a device of which necessity for maintaining a communication cycle is set to be higher than that of other devices (a high-priority device) in devices that periodically communicate with the control device via the network in the various setting information. When a high-priority device is defined in the various setting information, the control device generates or updates the reference table such that reception data with the high-priority device as a source address is stored in a reception queue to which a high priority has been given.

Similarly, when necessity for maintaining a communication cycle with respect to a certain device group is set to be higher than that with respect to other device groups in the various setting information, the control device may generate or update the reference table as follows. That is, the control device may generate or update the reference table such that reception data with a device included in the certain device group as a source address is stored in a first reception queue to which a higher priority than that of a second reception queue has been given. The control device may generate or update the reference table such that reception data with a device included in the other device group as a source address is stored in a second reception queue to which a lower priority than that of the first reception queue has been given.

When a communication priority of communication with a certain destination address is defined to be higher than that of communication with other destination addresses in the various setting information, the control device may generate or update the reference table as follows. That is, the control device may generate or update the reference table such that reception data with the certain destination address as a destination address is stored in a first reception queue to which a higher priority than that of a second reception queue has been given. The control device may generate or update the reference table such that reception data with the other destination address as a destination address is stored in a second reception queue to which a lower priority than that of the first reception queue has been given.

When a processing priority of reception data of a certain frame type is defined to be higher than that of reception data of another frame type in the various setting information, the control device may generate or update the reference table as follows. That is, the control device may generate or update the reference table such that reception data of the certain frame type is stored in a first reception queue to which a higher priority than that of a second reception queue has been given. The control device may generate or update the reference table such that reception data of the other frame type is stored in a second reception queue to which a lower priority than that of the first reception queue has been given.

Accordingly, the communication control device can appropriately select a reception queue in which the reception data is to be stored with reference to the generated reference table without causing a user to labor two times.

In the communication control device according to the aspect of the present invention, the start time log may be stored in a nonvolatile memory inside or outside of the communication control device.

With this configuration, the communication control device stores the start time log in a nonvolatile memory inside or outside of the communication control device. Accordingly, the communication control device can appropriately store the start time log in a nonvolatile memory inside or outside of the communication control device such that the start time log can be easily used.

A control method according to another aspect of the present invention is a method for controlling a communication control device that stores reception data received from a network in any one of a plurality of reception queues to which different priorities have been given in advance to transfer the reception data to a main memory, the method including: a selection step of selecting a reception queue in which the reception data is to be stored out of the plurality of reception queues using at least one of a source address, a destination address, and an Ethernet frame type of the reception data with reference to a reference table in which at least one of the source address, the destination address, and the Ethernet frame type of the reception data to be stored is defined for at least one of the plurality of reception queues; and a storage step of storing the reception data in the reception queue selected in the selection step.

With this configuration, the control method includes selecting a reception queue in which reception data is to be stored out of the plurality of reception queues using at least one of the source address, the destination address, and the Ethernet frame type of the reception data.

Here, all of the source address, the destination address, and the Ethernet frame type are original information of the reception data, but are not information which is newly added to select the reception queue in which the reception data is to be stored.

Accordingly, the control method can enable storing the reception data in a desired reception queue selected out of the plurality of reception queues to which different priorities have been given in advance without using additional information indicating processing priorities.

Embodiments which are obtained by appropriately combining technical means described above in different embodiments are included in the technical scope of the present invention.

### [Reference Signs List]

3 Network
13 Reception queue
10 Communication controller (communication control device)
20 Main memory
42 Various setting information
121 Queue selection table (reference table)
122 Selection unit
NP Priority
S60 Queue selecting process (selection step)
S70 Transfer process (storage step)
S710 Storage step

## Claims

1. A communication control device (10) that is adapted to store reception data received from a network (3) in any one of a plurality of reception queues to which different priorities have been given in advance to transfer the reception data to a main memory (20), the communication control device (10) comprising:
a reference table (121) in which at least one of a source address, a destination address, and an Ethernet frame type of the reception data to be stored is defined for at least one of the plurality of reception queues; and
the communication control device **characterized by** further comprising:
a selection unit (122) configured to select a reception queue in which the reception data is to be stored out of the plurality of reception queues with reference to the reference table (121) using at least one of the source address, the destination address, and the Ethernet frame type of the reception data.

2. The communication control device (10) according to claim 1, wherein a start time log is generated, the start time log being a log in which a reception start time which is a time point at which reception of the reception data from the network (3) has started and a transfer start time which is a time point at which transfer of the reception data to the main memory (20) has started are correlated.

3. The communication control device (10) according to claim 1 or 2, wherein an order change log is generated, the order change log being a log indicating a number of times other reception data received after one reception data has been received has been transferred to the main memory (20) prior to the one reception data.

4. The communication control device (10) according to any one of claims 1 to 3, wherein an end time log is generated, the end time log being a log in which a reception end time which is a time point at which reception of the reception data from the network (3) has ended and a transfer end time which is a time point at which transfer of the reception data to the main memory (20) has ended are correlated.

5. The communication control device (10) according to claim 4, wherein the reception end time is calculated on the basis of a reception start time which is a time point at which reception of the reception data from the network (3) has started, a data rate of the network (3), and a data size of the reception data, and
wherein the transfer end time is calculated on the basis of a transfer start time which is a time point at which transfer of the reception data to the main memory (20) has started, a transfer rate to the main memory (20), and the data size of the reception data.

6. The communication control device (10) according to any one of claims 1 to 5, wherein the selection unit (122) is configured to select a reception queue in which the reception data is to be stored out of the plurality of reception queues with reference to the reference table (121) using only the source address of the reception data.

7. The communication control device (10) according to any one of claims 1 to 6, wherein the reference table (121) is generated using various setting information (42) which is defined for the network (3) by a user and which includes configuration information of the network (3).

8. The communication control device (10) according to claim 2, wherein the start time log is stored in a nonvolatile memory (40) inside or outside of the communication control device (10).

9. A method for controlling a communication control device (10) that stores reception data received from a network (3) in any one of a plurality of reception queues to which different priorities have been given in advance to transfer the reception data to a main memory (20), wherein the method is **characterized by** comprising:
a selection step of selecting a reception queue in which the reception data is to be stored out of the plurality of reception queues using at least one of a source address, a destination address, and an Ethernet frame type of the reception data with reference to a reference table (121) in which at least one of the source address, the destination address, and the Ethernet frame type of the reception data to be stored is defined for at least one of the plurality of reception queues; and
a storage step of storing the reception data in the reception queue selected in the selection step.

## Patentansprüche

1. Kommunikationssteuervorrichtung (10), die dazu ausgelegt ist, Empfangsdaten, die von einem Netzwerk (3) empfangen wurden, in irgendeiner von mehreren Empfangswarteschlangen, denen vorab unterschiedliche Prioritäten zugewiesen wurden, zu speichern, um die Empfangsdaten zu einem Hauptspeicher (20) zu übertragen, wobei die Kommunikationssteuervorrichtung (10)
eine Referenztabelle (121), in der für wenigstens eine der mehreren Empfangswarteschlangen wenigstens eines aus einer Quelladresse, einer Zieladresse und einer Art des Ethernet-Frames der Empfangsdaten, die gespeichert werden sollen, definiert ist,
aufweist; und
die Kommunikationssteuervorrichtung dadurch definiert ist, dass sie ferner
eine Wahleinheit (122) aufweist, die so eingerichtet ist, dass sie unter Bezugnahme auf die Referenztabelle (121) unter Verwendung wenigstens eines aus der Quelladresse, der Zieladresse und der Art des Ethernet-Frames der Empfangsdaten eine Empfangswarteschlange, in der die Empfangsdaten gespeichert werden sollen, aus den mehreren Empfangswarteschlangen wählt.

2. Kommunikationssteuervorrichtung (10) nach Anspruch 1, wobei ein Startzeitprotokoll erzeugt wird, wobei das Startzeitprotokoll ein Protokoll ist, in dem eine Empfangsstartzeit, die ein Zeitpunkt ist, zu dem der Empfang der Empfangsdaten von dem Netzwerk (3) begonnen hat, und eine Übertragungsstartzeit, die ein Zeitpunkt ist, zu dem die Übertragung der Empfangsdaten zu dem Hauptspeicher (20) begonnen hat, verknüpft sind.

3. Kommunikationssteuervorrichtung (10) nach Anspruch 1 oder 2, wobei ein Reihenfolgenänderungsprotokoll erzeugt wird, wobei das Reihenfolgenänderungsprotokoll ein Protokoll ist, das eine Anzahl von Malen angibt, für die andere Empfangsdaten, die nach dem Empfang von bestimmten Empfangsdaten empfangen wurden, vor diesen bestimmten Empfangsdaten zu dem Hauptspeicher (20) übertragen wurden.

4. Kommunikationssteuervorrichtung (10) nach einem der Ansprüche 1 bis 3, wobei ein Endzeitprotokoll erzeugt wird, wobei das Endzeitprotokoll ein Protokoll ist, in dem eine Empfangsendzeit, die ein Zeitpunkt ist, zu dem der Empfang der Empfangsdaten von dem Netzwerk (3) geendet hat, und eine Übertragungsendzeit, die ein Zeitpunkt ist, zu dem die Übertragung der Empfangsdaten zu dem Hauptspeicher (20) geendet hat, verknüpft sind.

5. Kommunikationssteuervorrichtung (10) nach Anspruch 4, wobei die Empfangsendzeit auf der Basis einer Empfangsstartzeit, die ein Zeitpunkt ist, zu dem der Empfang der Empfangsdaten von dem Netzwerk (3) begonnen hat, einer Datenübertragungsgeschwindigkeit des Netzwerks (3) und einer Datengröße der Empfangsdaten berechnet wird, und
wobei die Übertragungsendzeit auf der Basis einer Übertragungsstartzeit, die ein Zeitpunkt ist, zu dem die Übertragung der Empfangsdaten zu dem Hauptspeicher (20) begonnen hat, einer Übertragungsgeschwindigkeit zu dem Hauptspeicher (20) und der Datengröße der Empfangsdaten berechnet wird.

6. Kommunikationssteuervorrichtung (10) nach einem der Ansprüche 1 bis 5, wobei die Wahleinheit (122) so eingerichtet ist, dass sie eine Empfangswarteschlange, in der die Empfangsdaten gespeichert werden sollen, unter Bezugnahme auf die Referenztabelle (121) unter Verwendung nur der Quelladresse der Empfangsdaten aus den mehreren Empfangswarteschlangen wählt.

7. Kommunikationssteuervorrichtung (10) nach einem der Ansprüche 1 bis 6, wobei die Referenztabelle (121) unter Verwendung verschiedener Einstellinformationen (42), die von einem Benutzer für das Netzwerk (3) definiert wurden und Konfigurationsinformationen des Netzwerks (3) enthalten, erzeugt wird.

8. Kommunikationssteuervorrichtung (10) nach Anspruch 2, wobei das Startzeitprotokoll in einem nichtflüchtigen Speicher (40) innerhalb oder außerhalb der Kommunikationssteuervorrichtung (10) gespeichert wird.

9. Verfahren zum Steuern einer Kommunikationssteuervorrichtung (10), die Empfangsdaten, die von einem Netzwerk (3) empfangen wurden, in irgendeiner von mehreren Empfangswarteschlangen, denen vorab unterschiedliche Prioritäten zugewiesen wurden, speichert, um die Empfangsdaten zu einem Hauptspeicher (20) zu übertragen, wobei das Verfahren **dadurch gekennzeichnet ist, dass** es
einen Wahlschritt, bei dem unter Bezugnahme auf eine Referenztabelle (121), in der für wenigstens eine der mehreren Empfangswarteschlangen wenigstens eines aus einer Quelladresse, einer Zieladresse und einer Art des Ethernet-Frames der Empfangsdaten, die gespeichert werden sollen, definiert ist, unter Verwendung wenigstens eines aus der Quelladresse, der Zieladresse und der Art des Ethernet-Frames der Empfangsdaten eine Empfangswarteschlange, in der die Empfangsdaten gespeichert werden sollen, aus den mehreren Empfangswarteschlangen gewählt wird; und
einen Speicherschritt, bei dem die Empfangsdaten in der Empfangswarteschlange, die bei dem Wahlschritt gewählt wurde, gespeichert werden,
umfasst.

## Revendications

1. Dispositif de commande de communication (10) qui est adapté pour stocker des données de réception reçues depuis un réseau (3) dans l'une quelconque d'une pluralité de files d'attente de réception auxquelles des priorités différentes ont été données à l'avance pour transférer les données de réception à une mémoire principale (20), le dispositif de commande de communication (10) comprenant :
une table de référence (121) dans laquelle au moins l'un d'une adresse de source, d'une adresse de destination et d'un type de trame Ethernet des données de réception à stocker est défini pour au moins l'une de la pluralité de files d'attente de réception ; et
le dispositif de commande de communication étant **caractérisé en ce qu'**il comprend en outre :
une unité de sélection (122) configurée pour sélectionner une file d'attente de réception dans laquelle les données de réception doivent être stockées parmi la pluralité de file d'attente de réception par rapport à la table de référence (121) à l'aide d'au moins l'un de l'adresse de source, de l'adresse de destination et du type de trame Ethernet des données de réception.

2. Dispositif de commande de communication (10) selon la revendication 1, dans lequel un journal de temps de début est généré, le journal de temps de début étant un journal dans lequel un temps de début de réception qui est un point temporel auquel une réception des données de réception depuis le réseau (3) a commencé et un temps de début de transfert qui est un point temporel auquel un transfert des données de réception à la mémoire principale (20) a commencé sont corrélés.

3. Dispositif de commande de communication (10) selon la revendication 1 ou 2, dans lequel un journal de changement d'ordre est généré, le journal de changement d'ordre étant un journal indiquant un nombre de fois que d'autres données de réception reçues après que des données de réception ont été reçues ont été transférées à la mémoire principale (20) avant les données de réception.

4. Dispositif de commande de communication (10) selon l'une quelconque des revendications 1 à 3, dans lequel un journal de temps de fin est généré, le journal de temps de fin étant un journal dans lequel un temps de fin de réception qui est un point temporel auquel une réception des données de réception depuis le réseau (3) s'est terminée et un temps de fin de transfert qui est un point temporel auquel un transfert des données de réception à la mémoire principale (20) s'est terminé sont corrélés.

5. Dispositif de commande de communication (10) selon la revendication 4, dans lequel le temps de fin de réception est calculé sur la base d'un temps de début de réception qui est un point temporel auquel une réception des données de réception depuis le réseau (3) a commencé, d'un débit de données du réseau (3) et d'une taille de données des données de réception, et
dans lequel le temps de fin de transfert est calculé sur la base d'un temps de début de transfert qui est un point temporel auquel un transfert des données de réception à la mémoire principale (20) a commencé, d'un débit de transfert à la mémoire principale (20) et de la taille de données des données de réception.

6. Dispositif de commande de communication (10) selon l'une quelconque des revendications 1 à 5, dans lequel l'unité de sélection (122) est configurée pour sélectionner une file d'attente de réception dans laquelle les données de réception doivent être stockées parmi la pluralité de files d'attente de réception par rapport à la table de référence (121) à l'aide uniquement de l'adresse de source des données de réception.

7. Dispositif de commande de communication (10) selon l'une quelconque des revendications 1 à 6, dans lequel la table de référence (121) est générée à l'aide de diverses informations de réglage (42) qui sont définies pour le réseau (3) par un utilisateur et qui incluent des informations de configuration du réseau (3).

8. Dispositif de commande de communication (10) selon la revendication 2, dans lequel le journal de temps de début est stocké dans une mémoire non volatile (40) à l'intérieur ou à l'extérieur du dispositif de commande de communication (10).

9. Procédé de commande d'un dispositif de commande de communication (10) qui stocke des données de réception reçues depuis un réseau (3) dans l'une quelconque d'une pluralité de files d'attente de réception auxquelles des priorités différentes ont été données à l'avance pour transférer les données de réception à une mémoire principale (20), dans lequel le procédé est **caractérisé en ce qu'**il comprend :
une étape de sélection consistant à sélectionner une file d'attente de réception dans laquelle les données de réception doivent être stockées parmi la pluralité de file d'attente de réception à l'aide d'au moins l'un d'une adresse de source, d'une adresse de destination et d'un type de trame Ethernet des données de réception par rapport à une table de référence (121) dans laquelle l'au moins un de l'adresse de source, de l'adresse de destination et du type de trame Ethernet des données de réception à stocker est défini pour au moins l'une de la pluralité de files d'attente de réception ; et
une étape de stockage consistant à stocker les données de réception dans la file d'attente de réception sélectionnée à l'étape de sélection.
